# EUROPEAN PATENT APPLICATION

(11) **EP 1 259 057 A2**
(43) Date of publication of application: **20.11.2002**
(21) Application number: 02011055.7
(22) Date of filing: 17.05.2002
(51) Int. Cl.: H04N 1/00

(54) **Image information processing apparatus and image information processing method**

(30) Priority: 18.05.2001 JP 2001150034; 06.11.2001 JP 2001341227
(71) Applicant: MATSUSHITA ELECTRIC INDUSTRIAL CO., LTD., Kadoma-shi, Osaka 571-8501 (JP)
(72) Inventor: Matsunaga, Shigeki, Kadoma-shi, Osaka 571-0064 (JP)
(74) Representative: Grünecker, Kinkeldey, Stockmair & Schwanhäusser Anwaltssozietät

(57) **Abstract**

An image information processing apparatus and image information processing method that make it possible to print all or some of a related plurality of screens by means of a single operation, and to greatly reduce the time and trouble required for printing. In the present invention, link destinations are searched for sequentially using link information set in BML files composing data broadcast screens, objects of printing are extracted, and the file names of the extracted objects of printing are stored. Also, a DII message in the data carousel method is analyzed, all file names composing a data broadcast program are obtained, and the obtained file names are stored.

## Description

### BACKGROUND OF THE INVENTION

### Field of the Invention

The present invention relates to an image information processing apparatus and image information processing method.

### Description of Related Art

Data digitalization is currently making rapid progress in the broadcasting technology field, and there is ongoing expansion of the introduction of digital broadcasting in which high-quality multimedia information is transmitted via transmission paths such as satellite wave and terrestrial wave, including BS (broadcast satellite) digital broadcasting, CS (communication satellite) digital broadcasting, and terrestrial digital broadcasting, for example.

With digital broadcasting, a variety of multimedia services using data (so-called data broadcasting services) are possible in addition to high-quality video and audio services. For example, two-way services such as requests, questionnaire voting, and teleshopping are possible in addition to services in which broadcast data is handled interactively, such as electronic program information, news, weather, and lifestyle information services. These data services include those offered linked to a TV or audio program, and those in which a service is created independently using data only.

With such digital broadcasting, and with digital data broadcasting in particular, the digitalization of broadcast data offers viewers the extremely useful ability to print out any desired contents at will from broadcast digital contents, using a personal printer installed at home.

However, in conventional systems, only the screen being displayed on a TV set can be printed, and no method of printing all or some of the data broadcast screens composing a data broadcast program by means of a single operation has been known. That is to say, there has been a problem in that, when a data broadcast program is composed of a plurality of data broadcast screens, a data broadcast program viewer (personal printer user) has to display on the TV and order printing of screens the viewer wishes to print one by one, so that printing is time-consuming.

This problem is also met with when printing Web pages obtained by means of a digital home appliance that has a function of connection to the Internet (such as a game machine, TV set, telephone set, refrigerator, microwave oven, or dedicated Internet terminal) on a personal printer.

### SUMMARY OF THE INVENTION

It is an object of the present invention to provide an image information processing apparatus and image information processing method that make it possible to print all or some of a related plurality of screens by means of a single operation, and to greatly reduce the time and trouble required for printing.

According to an aspect of the invention, an image information processing apparatus comprises extraction means for extracting a screen related to a displayed screen from among a screen to be displayed, and output means for outputting image data corresponding to the screen extracted by the extraction means.

According to another aspect of the invention, an image information processing apparatus comprises link destination searching means for searching for a link destination of a screen, based on link information set in data to be displayed in a screen, and output means for outputting image data corresponding to a screen of the link destination retrieved by the link destination searching means.

According to still another aspect of the invention, an image information processing apparatus comprises data name extracting means for extracting a name of data composing a data broadcast screen composing a data broadcast program, based on data name information set in a digital data broadcasting data transmission method, data name storing means for storing the data name extracted by the data name extracting means, and output means for outputting image data corresponding to a data name stored in the data name storing means.

According to a further aspect of the invention, an image information processing apparatus comprises data name extracting means for extracting a name of data composing a data broadcast screen composing a data broadcast program, based on data name information set in a digital data broadcasting data transmission method, data name storing means for storing the data name extracted by the data name extracting means, image data extracting means for extracting image data corresponding to a data name stored in the data name storing means, and print data sending means for outputting a command describing processing to be performed on image data based on a given printing condition, and the image data extracted by the image data extracting means.

According to a still further aspect of the invention, an image information processing method comprises an extraction step of extracting a screen related to a displayed screen from among a screen to be displayed, and an output step of outputting image data corresponding to the screen extracted in the extraction step.

According to a yet further aspect of the invention, an image information processing method comprises a link destination searching step of searching for a link destination of a screen, based on link information set in data to be displayed in a screen, and an output step of outputting image data corresponding to a screen of the link destination retrieved in the link destination searching step.

According to a yet further aspect of the invention, an image information processing method comprises a data name extracting step of extracting a name of data composing a data broadcast screen composing a data broadcast program, based on data name information set in a digital data broadcasting data transmission method, a data name storing step of storing the data name extracted in the data name extracting step, and an output step of outputting image data corresponding to a data name stored in the data name storing means.

According to a yet further aspect of the invention, an image information processing method comprises a data name extracting step of extracting a name of data composing a data broadcast screen composing a data broadcast program, based on data name information set in a digital data broadcasting data transmission method, a data name storing step of storing in data name storing means the data name extracted in the data name extracting step, an image data extracting step of extracting image data corresponding to a data name stored in the data name storing means, and a print data sending step of outputting a command describing processing to be performed on image data based on a given printing condition, and the image data extracted in the image data extracting step.

The above and other objects and features of the present invention will become clear from the following description of the preferred embodiments taken in conjunction with the accompanying drawings.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram showing an example of the configuration of an image information processing apparatus according to Embodiment 1 of the present invention;
FIG. 2 is an explanatory drawing of the data carousel method;
FIG.3 is an outline explanatory drawing of "Print All";
FIG.4 is a flowchart showing an example of the operation of a receiver when a Print All command is received from a user, corresponding to Embodiment 1;
FIG.5 is an explanatory drawing of the link destination page finding method;
FIG. 6 is a flowchart showing another example of the operation of a receiver when a Print All command is received from a user, corresponding to Embodiment 1;
FIG.7A is an explanatory drawing of the method of obtaining a top page file name;
FIG. 7B is another explanatory drawing of the method of obtaining the top page file name;
FIG. 7C is still another explanatory drawing of the method of obtaining the top page file name;
FIG. 7D is a further explanatory drawing of the method of obtaining the top page file name;
FIG.8 is a flowchart showing still another example of the operation of a receiver when a Print All command is received from a user, corresponding to Embodiment 1;
FIG.9A is a drawing showing an example of 2-in-1 printing;
FIG. 9B is another drawing showing the example of 2-in-1 printing;
FIG. 10A is a drawing showing an example of processing for preventing duplicate printing;
FIG. 10B is another drawing showing the example of processing for preventing duplicate printing;
FIG. 11 is an outline explanatory drawing of "Lower-Level Print";
FIG.12 is a flowchart showing an example of the operation of a receiver when an Intra-Link Lower-Level Print command is received from a user, corresponding to Embodiment 1;
FIG.13A is an explanatory drawing of a case where link-from-top-page level information is used as level information;
FIG.13B is another explanatory drawing of the case where link-from-top-page level information is used as level information;
FIG. 13C is still another explanatory drawing of the case where link-from-top-page level information is used as level information;
FIG.14 is a flowchart showing an example of the operation of a receiver when a Non-Higher-Level Print command is received from a user, corresponding to Embodiment 1;
FIG.15 is an outline explanatory drawing of "Category Print";
FIG.16 is a drawing showing an example of a BML file to which a category attribute has been added;
FIG.17 is a flowchart showing an example of the operation of a receiver when an Intra-Link Category Print command is received from a user, corresponding to Embodiment 1;
FIG.18 is a flowchart showing an example of the operation of a receiver when a Non-Intra-Link Category Print command is received from a user, corresponding to Embodiment 1;
FIG.19 is an outline explanatory drawing of "Importance Print";
FIG.20 is a drawing showing an example of a BML file to which an importance attribute has been added;
FIG.21 is a flowchart showing an example of the operation of a receiver when an Intra-Link Importance Print command is received from a user, corresponding to Embodiment 1;
FIG.22 is a flowchart showing an example of the operation of a receiver when a Non-Intra-Link Importance Print command is received from a user, corresponding to Embodiment 1;
FIG. 23A is an outline explanatory drawing of "Merge Print";
FIG.23B is another outline explanatory drawing of "Merge Print";
FIG.23C is still another outline explanatory drawing of "Merge Print";
FIG.24 is an outline explanatory drawing of "Print Output Order Adjustment Print";
FIG.25 is a flowchart showing an example of the operation of a receiver when Print All and Sort Specification commands are received from a user, corresponding to Embodiment 1;
FIG. 26A is an outline explanatory drawing of "Output Destination Page Entry Print";
FIG.26B is another outline explanatory drawing of "Output Destination Page Entry Print";
FIG.27A is a drawing showing examples of a BML file before Output Destination Page Entry processing;
FIG.27B is a drawing showing examples of a BML file after Output Destination Page Entry processing;
FIG.28 is a flowchart showing an example of the operation of a receiver when Print All and Output Destination Page Entry Print commands are received from a user, corresponding to Embodiment 1;
FIG.29 is a flowchart showing an example of the operation of a receiver when Print All and Output Page Quantity Specification Print commands are received from a user, corresponding to Embodiment 1;
FIG.30A is an outline explanatory drawing of "Title Selective Print";
FIG.30B is another outline explanatory drawing of "Title Selective Print";
FIG.31 is a drawing showing an example of a BML file for presentation in the explanation of "Title Selective Print";
FIG.32 is a flowchart showing an example of the operation of a receiver when Print All and Title Selective Print commands are received from a user, corresponding to Embodiment 1;
FIG.33 is a block diagram showing an example of the configuration of an image information processing apparatus according to Embodiment 2 of the present invention;
FIG.34 is a drawing showing the data structure of a DII message;
FIG.35 is a flowchart showing an example of the operation of a receiver when a Print All command is received from a user, corresponding to Embodiment 2;
FIG.36 is a flowchart showing an example of the operation of a receiver when an Intra-Link Lower-Level Print command is received from a user, corresponding to Embodiment 2;
FIG.37 is a flowchart showing an example of the operation of a receiver when a Non-Higher-Level Print command is received from a user, corresponding to Embodiment 2;
FIG.38 is a flowchart showing an example of the operation of a receiver when an Intra-Link Category Print command is received from a user, corresponding to Embodiment 2;
FIG.39 is a flowchart showing an example of the operation of a receiver when a Non-Intra-Link Category Print command is received from a user, corresponding to Embodiment 2;
FIG.40 is a flowchart showing an example of the operation of a receiver when an Intra-Link Importance Print command is received from a user, corresponding to Embodiment 2;
FIG.41 is a flowchart showing an example of the operation of a receiver when a Non-Intra-Link Importance Print command is received from a user, corresponding to Embodiment 2;
FIG.42 is a flowchart showing an example of the operation of a receiver when Print All and Sort Specification commands are received from a user, corresponding to Embodiment 2;
FIG.43 is a flowchart showing an example of the operation of a receiver when Print All and Output Destination Page Entry Print commands are received from a user, corresponding to Embodiment 2;
FIG.44 is a flowchart showing an example of the operation of a receiver when Print All and Output Page Quantity Specification Print commands are received from a user, corresponding to Embodiment 2;
FIG.45 is a flowchart showing an example of the operation of a receiver when Print All and Title Selective Print commands are received from a user, corresponding to Embodiment 2; and
FIG.46 is a flowchart showing another example of the operation of a receiver when a Print All command is received from a user, corresponding to Embodiment 2.

### DESCRIPTION OF THE PREFERRED EMBODIMENTS

The gist of the present invention is to print all or some of a related plurality of screens (for example, screens related to the currently displayed screen) by means of a single operation for data broadcast screens in digital broadcasting or Web pages on the Internet.

With reference now to the accompanying drawings, embodiments of the present invention will be explained in detail below.

The following descriptions mainly concern the case where the present invention is applied to data broadcasting services in digital broadcasting.

According to the present invention, methods for printing all data broadcast screens composing an arbitrary data broadcast program by means of a single operation broadly comprise a method that uses link information set in each file (hereinafter referred to as "link following method" ) , and a method that uses a DII (Download Information Indication) message in the data carousel method (DSM-CC), which is a method of transmitting data broadcast contents, (hereinafter referred to as "DII reference method" ) . Both methods are used to obtain the file names of all screens composing a data broadcast program but their actual processing details differ, and so, for convenience, a case based on the link following method will be described in Embodiment 1 below, and a case based on the DII reference method will be described in Embodiment 2. The DII reference method can, of course, only be applied to data broadcasting services, and cannot be applied to existing Web pages.

### (Embodiment 1)

Embodiment 1 is a case where not only the currently displayed data broadcast screen but also all or some related data broadcast screens are printed by means of a single operation, using the link following method. As described later herein, data broadcast screens are composed of data groups (BML files) written in a markup language called BML (Broadcast Markup Language). In actual operation, one BML file corresponds to one page (screen) of data.

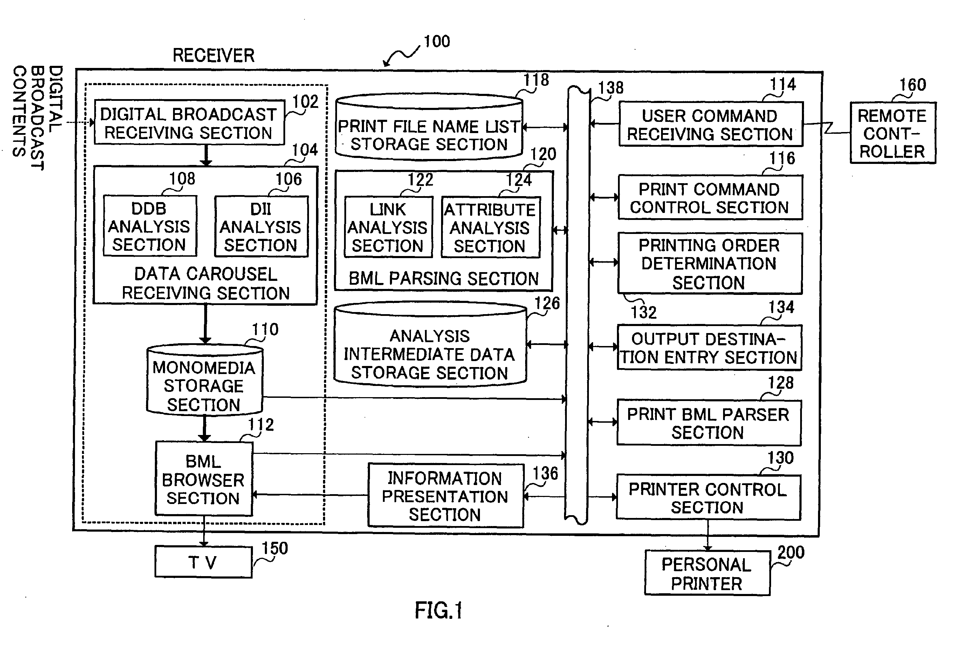

FIG. 1 is a block diagram showing an example of the configuration of an image information processing apparatus according to Embodiment 1 of the present invention.

This image information processing apparatus comprises a receiver 100 that receives digital broadcast contents. To the receiver 100 is connected on one side a television set (TV) 150 that plays back digital broadcast contents received by the receiver 100, and on the other side a personal printer (hereinafter referred to simply as "printer" ) 200 that receives and prints print data output from the receiver 100. The receiver 100, television set 150, and printer 200 are all installed in an ordinary home. That is to say, in the example in FIG.1, the receiver 100 takes the form of a so-called set-top box (STB). The receiver 100 has functions for receiving, tuning, and decoding broadcast signals, and makes up a receiving system together with the television set 150 performing display output. User input operations for this receiving system can be performed by means of an included remote controller 160.

The receiving system is not limited to a form in which the receiver (STB) and television set are separate, as in this embodiment, but may also be in a form in which the receiver is incorporated in the television set, as with a digital television set (DTV). In this case, an image information processing apparatus according to this embodiment is incorporated in the digital television set.

Here, digital broadcast contents are composed of various kinds of monomedia, such as text, moving images, static images, and audio, and, as stated above, are written in a markup language called BML. BML is a markup language for digital broadcast contents description that can combine and represent a plurality of monomedia, and can define remote controller operations.

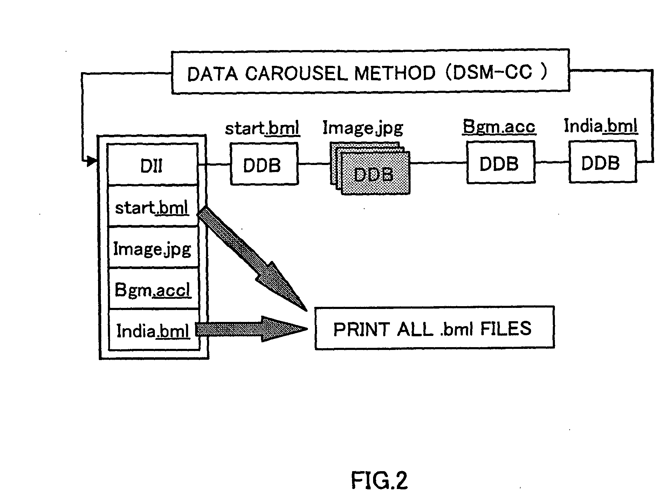

As described above, data broadcasts are transmitted by means of the data carousel method (a method whereby various monomedia are repeatedly transmitted by broadcasting). The data carousel method is defined by ISO/IEC13818-6, and is a data transmission method that enables the receiving side (user side) to obtain necessary data at arbitrary timing by transmitting data repeatedly, as shown in FIG.2.

In the data carousel method, as shown in FIG.2, data is transmitted using two kinds of messages: the above-described DII messages and DDB ( Download Data Block) messages. Actual data (handled in units called modules) is divided into DDB blocks, and transmitted by means of DDB messages. Detailed information for each module is transmitted by means of a DII message. That is to say, detailed information for each module is written in a DII. Detailed information includes information such as module type (text, moving image, static image, audio, etc.), file name, module information, module validity period, and so forth.

As shown in FIG.1, the receiver 100 has a digital broadcast receiving section 102, data carousel receiving section 104, monomedia storage section 110, and BML browser section 112. The data carousel receiving section 104 is provided with a DII analysis section 106 and DDB analysis section 108. Parts in FIG.1 enclosed by a dashed line (the digital broadcast receiving section 102, data carousel receiving section 104, monomedia storage section 110, and BML browser section 112) are component devices of an existing set-top box.

The digital broadcast receiving section 102 receives digital broadcasting radio waves that propagate digital broadcast contents.

The data carousel receiving section 104 decodes data transmitted by means of the data carousel method. At this time, the DII analysis section 106 analyzes a DII message and interprets what kind of data is stored in a DDB message, and the DDB analysis section 108 decodes the DDB message and extracts monomedia. That is to say, the data carousel receiving section 104 extracts DII messages and DDB messages from data transmitted by means of the data carousel method, and by analyzing the DII messages and rearranging the DDB messages in a predetermined order, outputs monomedia as files. The decoded monomedia are sent to the monomedia storage section 110.

The monomedia storage section 110 stores monomedia received from the data carousel receiving section 104. Monomedia are independent representational media such as text, moving images, static images, audio, and so forth, as described above, and data broadcasting files (BML files with a ".bml" extension) are one form of text media. That is to say, the monomedia storage section 110 is not a dedicated printing storage area.

The BML browser section 112 has a function for displaying digital broadcast contents on the television set 150 using monomedia stored in the monomedia storage section 110. A data broadcast screen is displayed on the television set 150 by interpreting, presenting, and executing a BML file stored in the monomedia storage section 110 through this BML browser section 112.

In this embodiment, it is possible to print not only the currently displayed data broadcast screen, but all or some related data broadcast screens, by means of a single operation, and a variety of print output modes can be implemented as the print output mode at this time. For example, print output modes that can be implemented with this embodiment include "Print All", "Lower-Level Print", "Category Print", "Importance Print", "Merge Print", "Print Output Order Adjustment Print", "Output Destination Page Entry Print", "Output Page Quantity Specification Print", and "Selective Print". "Print All" is a function that prints all of the data broadcast screens composing an arbitrary data broadcast program by means of a single operation. "Lower-Level Print", "Category Print", and "Importance Print" relate to functions that restrict the objects of printing using print attributes (level information, category attribute information, importance attribute information) or link information, and "Merge Print" relates to an output method peculiar to printing. "Print Output Order Adjustment Print" and "Output Destination Page Entry Print" relate to the print output order, including a function that changes the print output order to a form that is more easily viewed by the user, and "Output Page Quantity Specification Print" and "Selective Print" relate to functions that specify or limit the range or number of pages to be printed.

As shown in FIG.1, the receiver 100 also has a user command receiving section 114, print command control section 116, print file name list storage section 118, BML parsing section 120, analysis intermediate data storage section 126, print BML parser section 128, printer control section 130, printing order determination section 132, output destination entry section 134, information presentation section 136, and bus 138. The BML parsing section 120 is provided with a link analysis section 122 and attribute analysis section 124.

The user command receiving section 114 receives a user command (user operation input) from the remote controller 160, and interprets its content. If the content of the command relates to printing, the specified print command (above-described Print All, Lower-Level Print, Category Print, etc. ) is passed to the print command control section 116, and control of a series of processing steps up to print data output is requested. In addition to its function of receiving remote operations from the remote controller 160, the user command receiving section 114 may also be provided with operating buttons/switches (not shown) for direct manual operation by the user. This user command receiving section 114 is also a component device of an existing set-top box.

The print command control section 116 receives a request from the user command receiving section 114, and controls various sections to implement printing in order to control a series of processing steps up to output of print data to the printer 200.

The print file name list storage section 118 stores a list of file names of BML files to be printed (print files).

The BML parsing section 120 parses (analyzes the syntax of) BML files, and if there is a BML file to be printed, records its file name in the print file name list storage section 118. The BML parsing section 120 has a link analysis section 122 that analyzes BML files and performs a sequential search for link destinations, and an attribute analysis section 124 that analyzes attributes added to BML files.

The analysis intermediate data storage section 126 temporarily stores intermediate data required for analytical processing by the BML parsing section 120. For example, the analysis intermediate data storage section 126 stores, as necessary, a list of file names of BML files for which link analysis by the link analysis section 122 has already been completed.

The print BML parser section 128 receives a BML file from the monomedia storage section 110 and other sections (such as the output destination entry section 134, for example) in accordance with a control command from the print command control section 116, executes parsing, and performs conversion to a format (such as PostScript, for example) that can be printed by the printer 200. After format conversion, image data is passed to the printer control section 130 as print data.

The printer control section 130 outputs data received from the print BML parser section 128 to the printer 200. Processing of special printing conditions, such as N-in-1 printing (a function that prints N pages of data on one page),enlarged/reduced printing, orboth-sidesprinting, for example, is executed by this printer control section 130.

The printing order determination section 132 determines the order of print output in accordance with a predetermined algorithm or user specification, and sorts the file names in the print file name list storage section 118 into the determined order. In this case (and especially when sorting is performed in a user-specified order), it is desirable for user confirmation to be carried out before and after the sort via the information presentation section 136.

The output destination entry section 134 enters which page a link destination screen is to be printed in - that is, the link destination page number - directly in the document data in a BML file. Following that processing, the BML file is passed to the print BML parser section 128.

The information presentation section 136 performs processing for presenting printing related information to the user. The results of this processing are displayed on the television set 150 via the BML browser section 112. This makes possible interactive operation input by the user.

As regards actual hardware, for example, the print command control section 116, BML parsing section 120 (link analysis section 122 and attribute analysis section 124), print BML parser section 128, printer control section 130, printing order determination section 132, output destination entry section 134, and information presentation section 136 are configured by means of a CPU, and the print file name list storage section 118 and analysis intermediate data storage section 126 are configured by means of RAM. Also, although not shown, the receiver 100 is provided with a storage apparatus (such as ROM or flash memory, for example) that stores a program.

Next, the operation of a receiver 100 that has the above configuration will be described function by function. Specifically, the "Print All", "Lower-Level Print", "Category Print", "Importance Print", "Merge Print", "Print Output Order Adjustment Print", "Output Destination Page Entry Print", "Output Page Quantity Specification Print", and "Selective Print" functions will be described below in that order.

### (1) "Print All"

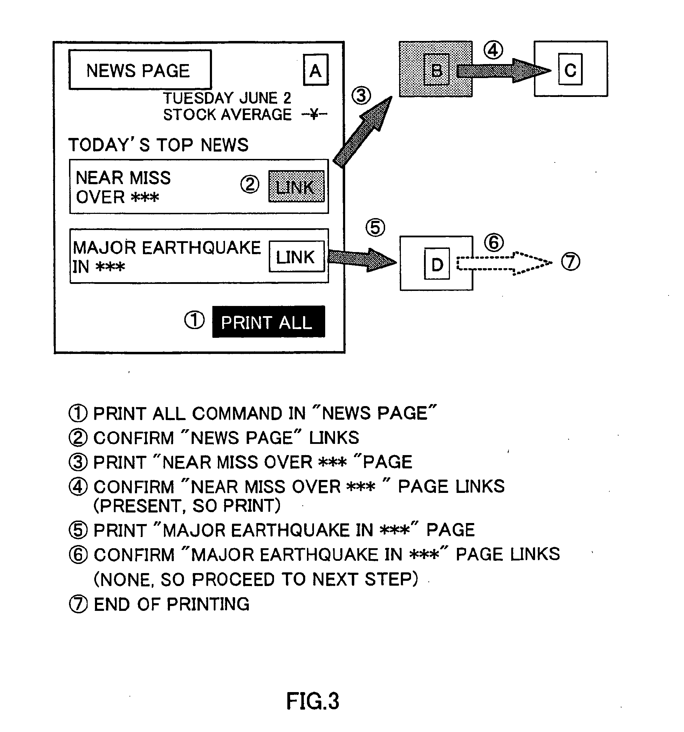

FIG.3 is an outline explanatory drawing of "Print All", showing an example of the operations when a "Print All" command is issued in the currently displayed data broadcast screen "News Page". Here, the "Print All" command is a command for printing all related screens (in the case of data broadcast screens, all data broadcast screens composing an arbitrary data broadcast program).

In the example shown in FIG.3, when a Print All command is issued in the currently displayed data broadcast screen "News Page" (①), "News Page" links are confirmed (②), the "Near Miss Over ***" page (screen B), which is the first link destination, is printed (③), then "Near Miss Over ***" page links are confirmed, and as there is a link destination, screen C, this screen C is printed (④). Then "News Page" is returned to and link confirmation is continued, the next link - the "Major Earthquake In ***" page (screen D) - is printed (⑤), and then "Major Earthquake In ***" page links are confirmed, and as there is no link destination, the processing flow proceeds to the next step (⑥), and as there are no more links, printing is terminated (⑦).

Thus, with the link following method, as a basic algorithm, in the case of the Print All command, after the currently displayed screen has been printed, links from that screen are searched for sequentially, and search results (link destination screens) are printed serially.

Next, a number of examples of modification of the above basic algorithm will be described. In the examples of modification described below, search results (link destination screens) are not printed serially, but instead, the relevant file names are initially stored sequentially in the print file name list storage section 118, and are printed all together after the search is completed. By initially storing the file names of search results in this way, it is made possible to change the print output order (see "Print Output Order Adjustment Print") and also to prevent duplicate printing (see the description later herein).

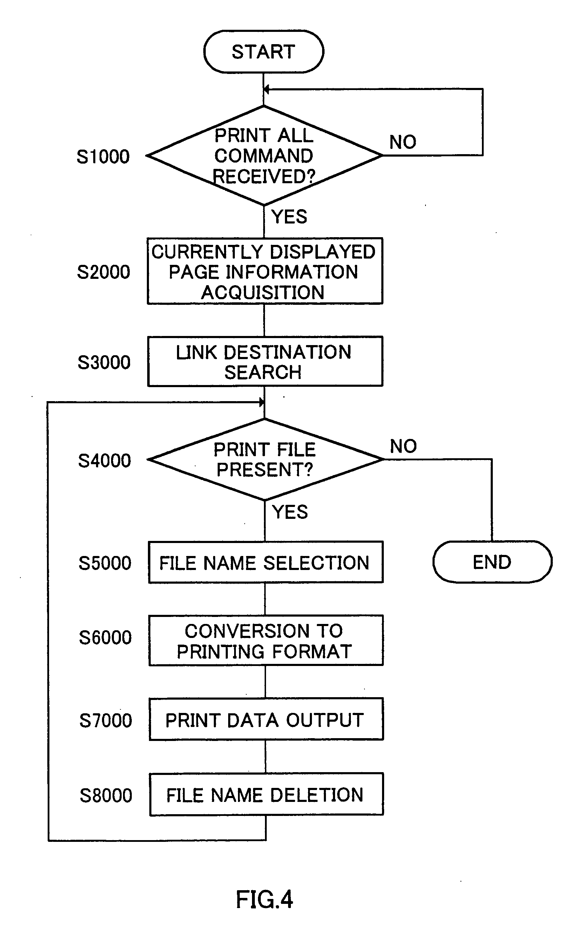

FIG.4 is a flowchart showing an example of the operation of the receiver 100 when a Print All command is received from a user. The flowchart shown in FIG.4 is stored in ROM or the like as a control program, and is executed by the CPU.

First, in Step S1000, a user command (operation input) from the remote controller 160 or the like is decoded, and it is determined whether or not a Print All command has been received. If the result of this determination is that a Print All command has been received (S1000: YES ) , the processing flow proceeds to Step S2000, and if the result of this determination is that a Print All command has not been received (S1000: NO), the system stands by.

Then, in Step S2000, currently displayed page information (for example, the file name of the BML file composing the currently displayed screen) is obtained. Currently displayed page information can be acquired from the BML browser section 112, for example. Specifically, among broadcasting extended functions provided in the BML browser section 112, there is a function called "getActiveDocument()" that acquires the absolute specification name of the currently displayed BML file, and currently displayed page information is obtained from here. The obtained file name is recorded in the print file name list storage section 118.

Then in Step S3000, the link analysis section 122 performs link analysis, searches sequentially for link destination pages with the currently displayed screen as the starting point, and records search result file names serially in the print file name list storage section 118. Then, when the search is completed, the processing flow proceeds to Step S4000.

Here, the method of finding a link destination page is as follows. In the case of a BML file that makes up a data broadcast screen, a function for jumping to a different page is defined by <script> in the BML file. A "browser.launchDocument(target,mode)" is a broadcasting extended function defined by ARIB STD-B24, being a function for making a page move to first argument "target". Thus, in a BML file that is the object of link analysis, if "browser.launchDocument(target,mode)" is used within the <script> elements, and the function defined there is used within the <body> elements, it is known that there is a link to "target" from the BML file that is the object of link analysis.

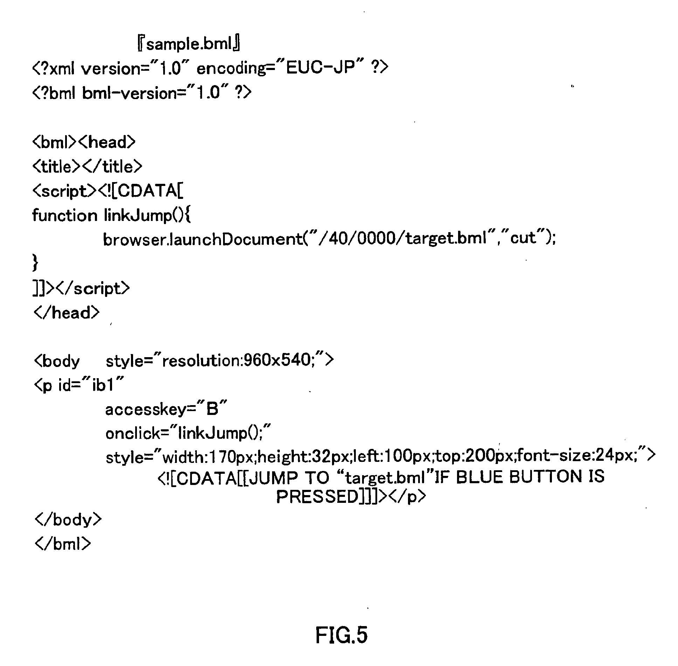

This will be described in concrete terms using "sample.bml" shown in FIG.5. In this "sample.bml", function "linkJump" is defined within the <script> elements, and broadcasting extended function "browser.launchDocument("/40/0000/target.bml","cut")" for linking to "/40/0000/target.bml" is called by this function. Also, function "linkJump" is used by the <p> element within the <body> elements. Thus, with this "sample.bml", it is known that there is a link to "/40/0000/target.bml".

The actual processing procedure for the search algorithm in Step S3000 is arbitrary, and not restricted in any particular way.

Then, in Step S4000, it is confirmed whether or not a file name is recorded in the print file name list storage section 118, and it is determined whether or not the file to be printed (print file) is present. If the result of this determination is that a print file is present (S4000: YES), the processing flow proceeds to Step S5000, and if the result of this determination is that a print file is not present (S4000: NO), it is determined that user command printing has been completed, and operation is terminated.

In Step S5000, one file name is selected from the print file name list storage section 118. The selection method may be, for example, to select the file name in the first position in the print file name list storage section 118.

Then, in Step S6000, the BML file corresponding to the file name selected in Step S5000 is extracted from the monomedia storage section 110, and is converted by the print BML parser section 128 to a print format that can be printed on the printer 200. After format conversion, data is sent to the printer control section 130 as print data.

Next, in Step S7000, data converted to a format for printing in Step 6000 (print data) is output to the external printer 200 via the printer control section 130.

Then, in Step S8000, the file name corresponding to the print data output in Step S7000 is deleted from the print file name list storage section 118, and then the processing flow returns to Step S4000. As a result of this deletion, file names in the print file name list storage section 118 are all moved up one step in the order.

Thus, according to this operation example, the currently displayed screen and all screens related thereto (screens that are link destinations of the currently displayed screen) can be printed by means of a single operation.

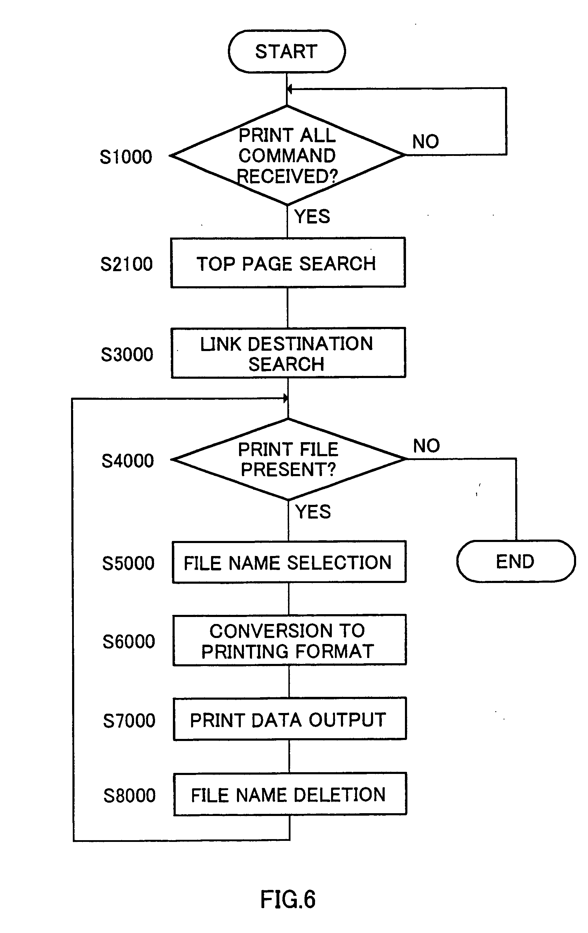

FIG.6 is a flowchart showing another example of the operation of the receiver 100 when a Print All command is received from a user. The flowchart shown in FIG.6 is stored in ROM or the like as a control program, and is executed by the CPU.

A characteristic of this operation example is that the file at which link analysis is started is not the currently displayed BML file but the top page BML file. Therefore, as shown in FIG.6, a Step S2100 is inserted in the flowchart shown in FIG.4, and Step S2000 is deleted from that flowchart.

Step S1000 is the same as the corresponding step in the flowchart shown in FIG.4, and therefore its description is omitted here.

Then in Step S2100, the top page of the currently displayed screen is searched for, and the corresponding file name is obtained. The top page file name can be acquired using the following method, for example.

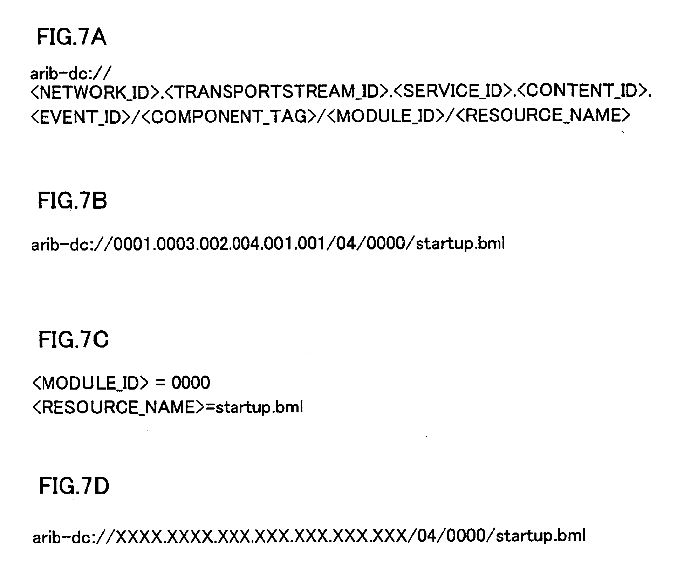

The name space of a file transmitted using the data carousel method in data broadcasting is absolutely specified using the format shown in FIG.7A. FIG.7B is an example of an absolutely specified file name. In FIG. 7A, the part up to "arib-dc://<NETWORK_ID>.<TRANSPORTSTREAM_ID>.<SERVICE _ID>.<CONTENT_ID>.<EVENT_ID>" is the part that specifies the data carousel stream. It is possible to perform specification as far as the level "Data carousel of what year, what month, what day, what hour, what minute, what channel". "<RESOURCE_NAME>" specifies a file name in a data broadcast, and "<COMPONENT_TAG>/<MODULE_ID>" indicates the data group unit (a concept equivalent to a directory for Web pages)(hereinafter this information will be referred to as "data group unit information"). Here, the fact that the file shown in FIG.7C is the top page is stipulated by ARIB STD-B24, and therefore the file that has the file name shown in FIG.7D is the top page. Thus, according to this method, the BML parsing section 120 only has to analyze the file names of BML files and find the file name shown in FIG.7D.

Step S3000 through Step S8000 are the same as the corresponding steps in the flowchart shown in FIG.4, and therefore a description of these steps is omitted here. However, in this operation example, link analysis is started from the top page found in Step S2100.

Thus, according to this operation example, even if the currently displayed screen is not the top page, link analysis is always performed starting from the top page, and therefore "Print All" can be performed from any page - even, for example, from a one-way page that has no links to other pages. In other words, it is possible to print all the screens of the data broadcast program containing the currently displayed data broadcast screen from any page.

Therefore, with the link following method, when a user wishes to search for all the screens of a data broadcast program as objects of printing, this can be done by searching for the top page and executing link analysis from the top page, as in this operation example.

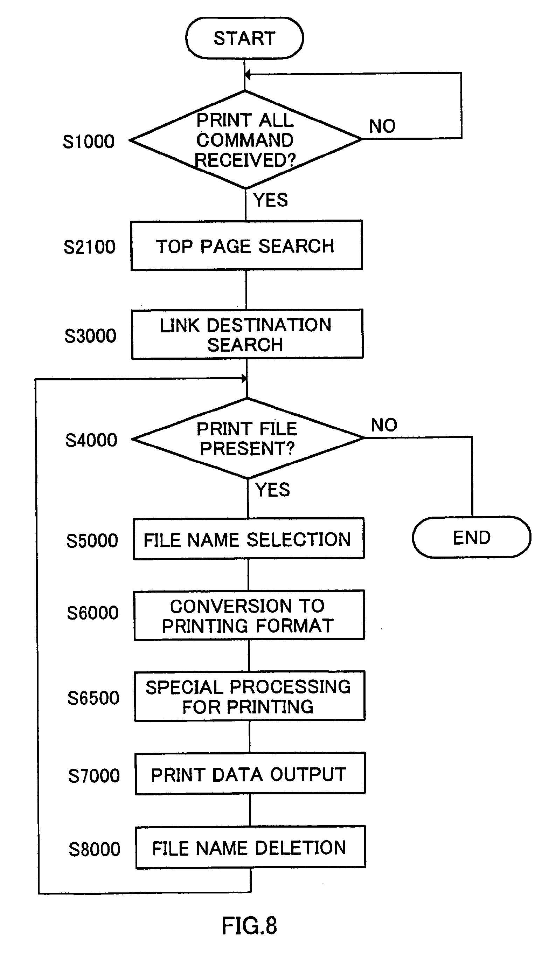

FIG.8 is a flowchart showing still another example of the operation of the receiver 100 when a Print All command is received from a user. The flowchart shown in FIG.8 is stored in ROM or the like as a control program, and is executed by the CPU.

A characteristic of this operation example is that data broadcast screens are printed based on special printing conditions (such as N-in-1 printing, enlarged/reduced printing, or both-sides printing, for example). Therefore, a Step S6500 as shown in FIG.8, for example, is inserted in the flowchart shown in FIG.6. Step S1000 through Step S6000 are the same as the corresponding steps in the flowchart shown in FIG.6, and therefore a description of these steps is omitted here.

Then, in Step S6500, data received from the print BML parser section 128 is processed by the printer control section 130 based on specified special printing conditions (such as N-in-1 printing, enlarged/reduced printing, or both-sides printing) . This kind of processing is possible because print data is cached on the receiver 100 side.

Step S7000 and Step S8000 are the same as the corresponding steps in the flowchart shown in FIG.6, and therefore a description of these steps is omitted here. However, in this operation example, data is output to the printer 200 after being processed based on special printing conditions.

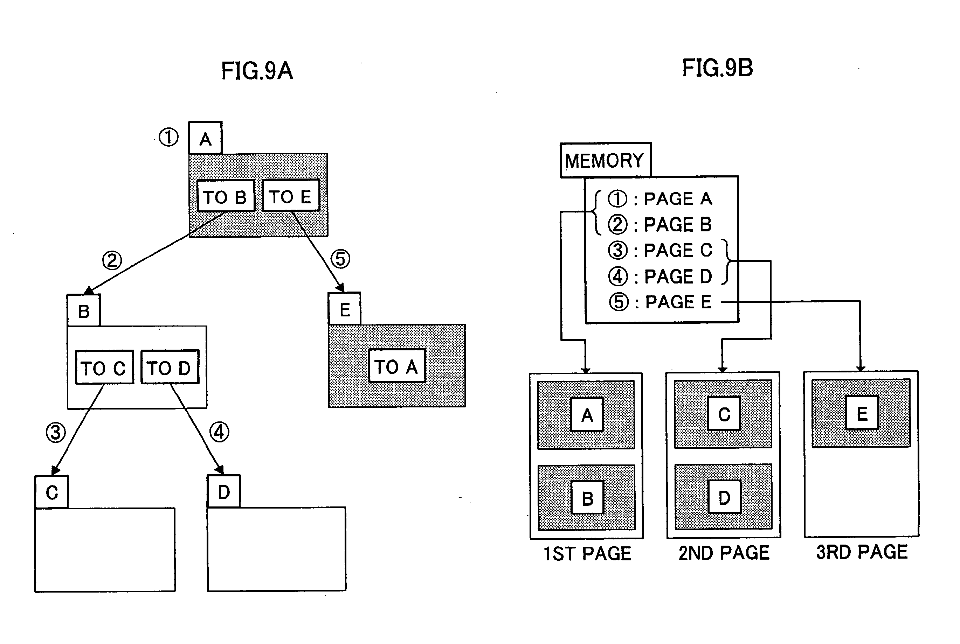

FIG.9 shows an example of 2-in-1 printing (a function that prints two pages of data on one page). When a data broadcast program that has the configuration shown in FIG. 9A is printed in its entirety using the 2-in-1 function, it is printed in the output format shown in FIG.9B.

Thus, according to this operation example, printing of data broadcast screens can be carried out for data broadcast screens based on special printing conditions, and it is possible to implement N-in-1 printing, enlarged/reduced printing, both-sides printing, and so forth, of data broadcast screens.

Printing based on special printing conditions can be used not only in the case of "Print All", but also together with any other function.

To prevent duplicate printing, a configuration is desirable whereby file names for printing or file names for which printing has finished are stored in a storage apparatus (memory), and recording is prohibited, or printing is prohibited, for a file name that is already recorded in the memory. For example, in the case of the operation examples shown in FIG.4, FIG.6, and FIG.8, if a search result file name is already stored in the print file name list storage section 118, that file name is not stored in the print file name list storage section 118, and a search result file name is stored in the print file name list storage section 118 only if that file name has not yet been stored in the print file name list storage section 118.

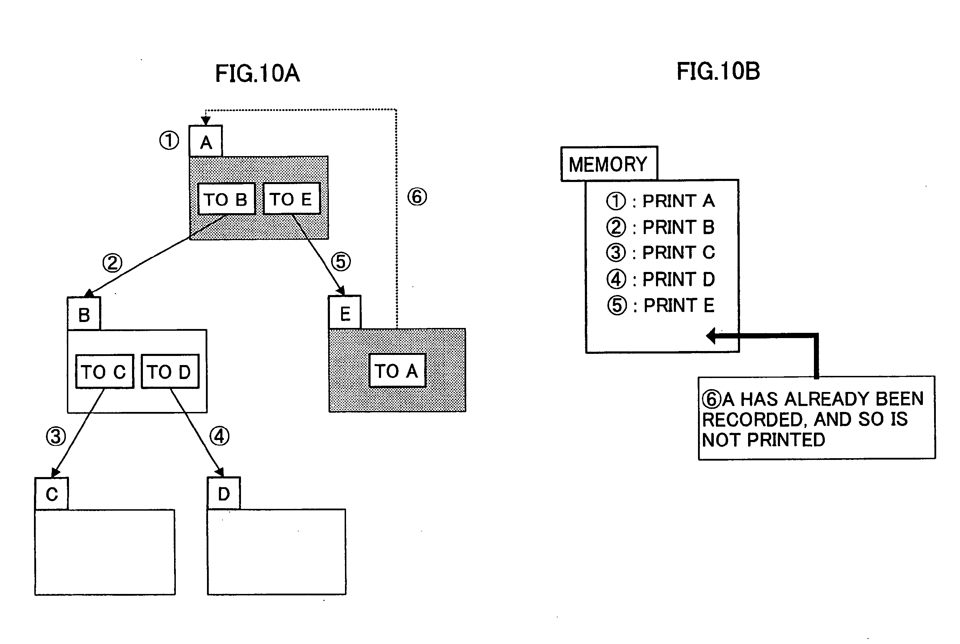

FIG. 10 shows an example of processing for preventing duplicate printing. In the case of a data broadcast program that has the screen configuration shown in FIG. 10A, since there is a link from screen E to screen A (the top page) , there is a risk that screen A will be printed twice. In this case, duplicate printing of screen A can be prevented by storing file names for printing or file names for which printing has finished in the memory beforehand, as shown in FIG. 10B.

Processing for preventing duplicate printing can, of course, be used not only in the case of "Print All", but also together with any other function.

### (2) "Lower-Level Print"

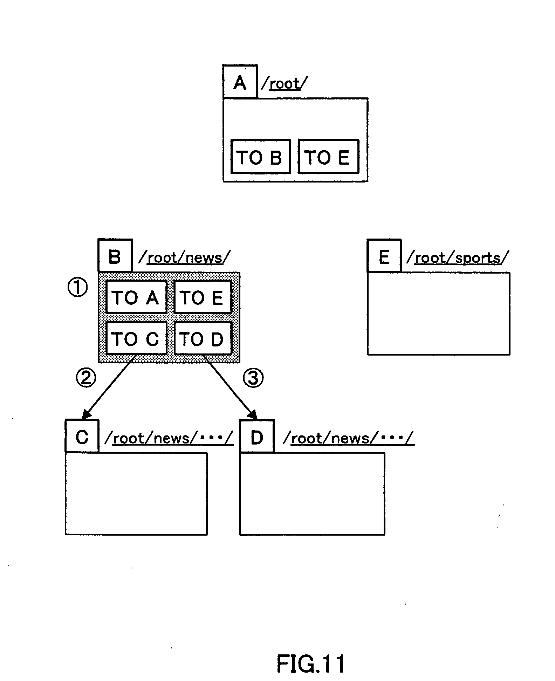

FIG.11 is a drawing for explaining "Lower-Level Print" in outline, and shows the processing contents when a "Lower-Level Print" command is output in currently displayed screen B. Here, the "Lower-Level Print" command is a command for printing only screens that are some of a related plurality of screens (in the case of data broadcast screens, all data broadcast screens composing an arbitrary data broadcast program) and whose level is lower than the level of the currently displayed screen. To be more precise, "Lower-Level Print" has a mode in which only screens whose level is the same as or lower than the level of the currently displayed screen are printed, regardless of whether or not they are in the same link, and a mode in which only screens that are in the same link as the currently displayed screen (that is to say, that are link destinations of the currently displayed screen) and whose level is lower than the level of the currently displayed screen are printed. Here, the former mode will be referred to as "Non-Higher-Level Print", and the latter mode as "Intra-Link Lower-Level Print". The former is useful when, for example, a user wishes to print unconditionally all screens not yet viewed, and the latter is useful when, for example, a user wishes to print screens not yet viewed, limited to those in the same link. In this detailed description, the expressions "screen(s) whose level is lower" and "lower-level screen(s)" include screens on the same level as the currently displayed screen, as described above.

In the example shown in FIG.11, currently displayed screen B has links to higher-level screen A, same-level screen E, lower-level screen C, and lower-level screen D. In this case, when an Intra-Link Lower-Level Print command is issued in currently displayed screen B, only screen B, screen C, and screen D are printed. When a Non-Higher-Level Print command is issued in currently displayed screen B, screen B, screen C, screen D, and screen E are printed.

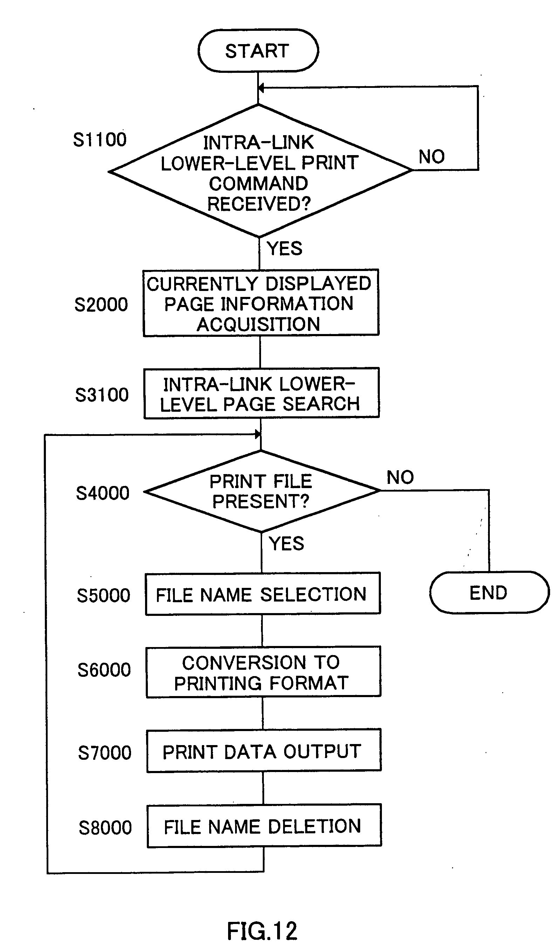

FIG.12 is a flowchart showing an example of the operation of the receiver 100 when an Intra-Link Lower-Level Print command is received from a user. The flowchart shown in FIG.12 is stored in ROM or the like as a control program, and is executed by the CPU.

In this operation example, as shown in FIG.12, a Step S1100 and Step S3100 are inserted in the flowchart shown in FIG.4, and Step S1000 and Step S3000 are deleted from that flowchart.

First, in Step S1100, a user command ( operation input) from the remote controller 160 or the like is decoded, and it is determined whether or not an Intra-Link Lower-Level Print command has been received. If the result of this determination is that an Intra-Link Lower-Level Print command has been received (S1100: YES), the processing flow proceeds to Step S2000, and if the result of this determination is that an Intra-Link Lower-Level Print command has not been received (S1100: NO), the system stands by.

Step S2000 is the same as the corresponding step in the flowchart shown in FIG.4, and therefore its description is omitted here.

Then, in Step S3100, the link analysis section 122 performs link analysis from the currently displayed page and sequentially searches for link destinations, and based on the link analysis results and level information set in each file, searches for screens that are link destinations of the currently displayed screen and are lower-level screens than that currently displayed screen, and records search result file names serially in the print file name list storage section 118. Then, when the search is completed, the processing flow proceeds to Step S4000. Link analysis can be performed by means of the same kind of method as the link destination page finding method described above.

As, in the case of a data broadcast screen (BML file), there is no concept of a directory as used for Web pages, the above-mentioned "moduleID" (module ID) indicating data group unit information is used as level information. In this case, therefore, screens to which there are links from the currently displayed page and for which the module ID is the same are searched for.

It is also possible to use link-from-top-page level information as level information. Specifically, since, with BML files (data broadcast screens), which file is the top page is uniquely decided, as described above, this fact is used to represent link levels from the top page in terms of points beforehand, and the number of points (score) is used as link-from-top-page level information.

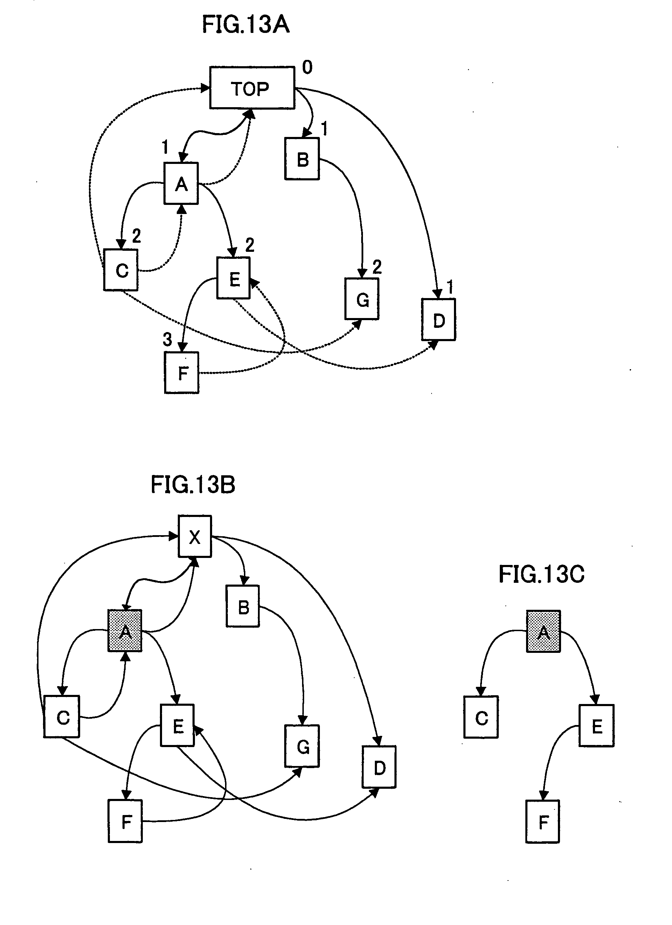

For example, in link analysis, scores are assigned according to the depth of links from the top page, as shown in FIG.13A, and the assigned scores are stored in the analysis intermediate data storage section 126, for example. If, at this time, an Intra-Link Lower-Level Print command is issued in currently displayed screen A, as shown in FIG.13B, a link tree is generated by deleting links to screens whose score is less than or equal to the score of screen A. The result is as shown in FIG.13 C. Then the screens included in the link tree shown in FIG.13C are printed. Either the low-to-high score order or the link order may be used as the printing order at this time.

The actual processing procedure for the search algorithm in Step S3100 is arbitrary, and not restricted in any particular way.
Step S4000 through Step S8000 are the same as the corresponding steps in the flowchart shown in FIG.4, and therefore a description of these steps is omitted here.

Thus, according to this operation example, the currently displayed screen and some only (lower-level screens in the same link) of the screens related thereto can be printed by means of a single operation.

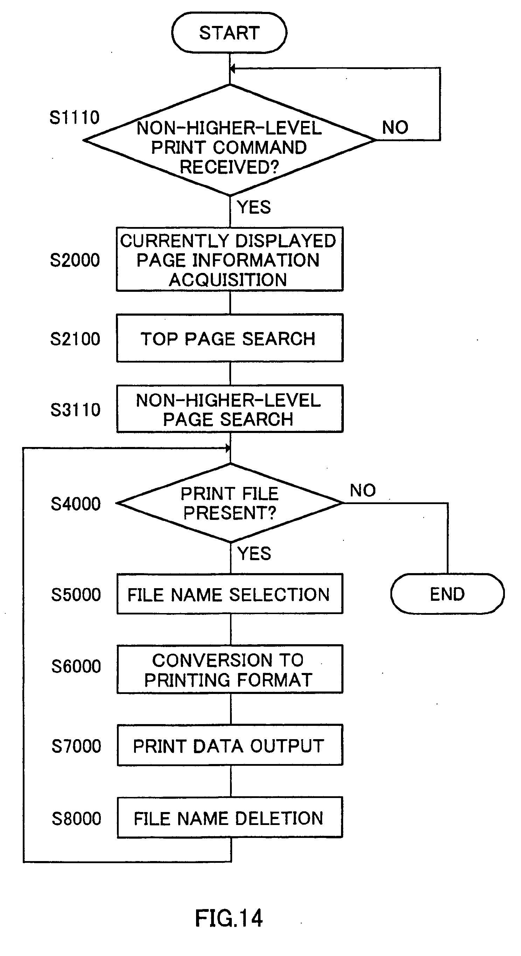

Next, FIG.14 is a flowchart showing an example of the operation of the receiver 100 when a Non-Higher-Level Print command is received from a user. The flowchart shown in FIG. 14 is stored in ROM or the like as a control program, and is executed by the CPU.

In this operation example, as shown in FIG.14, a Step S1110, Step S2100, and Step S3110 are inserted in the flowchart shown in FIG.4, and Step S1000 and Step S3000 are deleted from that flowchart.

First, in Step S1110, a user command ( operation input) from the remote controller 160 or the like is decoded, and it is determined whether or not a Non-Higher-Level Print command has been received. If the result of this determination is that a Non-Higher-Level Print command has been received (S1110: YES), the processing flow proceeds to Step S2000, and if the result of this determination is that a Non-Higher-Level Print command has not been received (S1110: NO), the system stands by. Step S2000 is the same as the corresponding step in the flowchart shown in FIG.4, and Step S2100 is the same as the corresponding step in the flowchart shown in FIG.6; therefore, a description of these steps is omitted here. The processing order of Step S2000 and Step S2100 may be reversed.

Then, in Step S3110, the link analysis section 122 performs link analysis from the top page and sequentially searches for link destinations, and based on level information set in each file, searches for screens whose level is the same as or lower than the level of the currently displayed screen, and records search result file names serially in the print file name list storage section 118. Then, when the search is completed, the processing flow proceeds to Step S4000. Link analysis can be performed by means of the same kind of method as the link destination page finding method described above. Also, a module ID, link-from-top-page level information, or the like, can be used as level information, as described above. When a module ID is used, a search is performed for screens for which the module ID is the same.

The actual processing procedure for the search algorithm in Step S3110 is arbitrary, and not restricted in any particular way. Step S4000 through Step S8000 are the same as the corresponding steps in the flowchart shown in FIG.4, and therefore a description of these steps is omitted here.

Thus, according to this operation example, the currently displayed screen and some only (non-higher-level screens of the same level or below) of the screens related thereto can be printed by means of a single operation.

As "Lower-Level Print" limits the objects of printing, it can be used together with any other function except "Print All".

### (3) "Category Print"

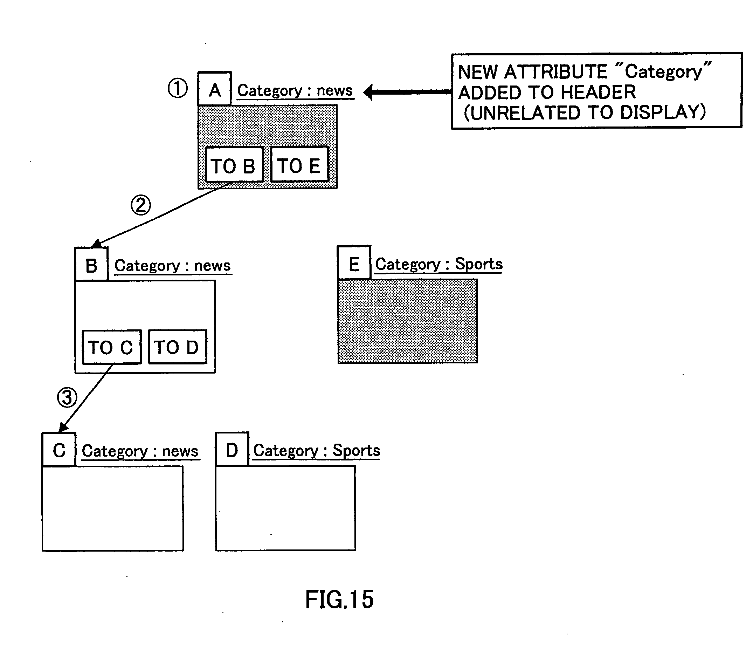

FIG.15 is a drawing for explaining "Category Print" in outline, and shows the processing contents when a "Category Print" command is output in currently displayed screen A. Here, the "Category Print" command is a command for printing only screens that are some of a related plurality of screens (in the case of data broadcast screens, all data broadcast screens composing an arbitrary data broadcast program) and whose category is the same as the category of the currently displayed screen. To be more precise, "Category Print" has a mode in which only screens whose category is the same as the category of the currently displayed screen are printed, regardless of whether or not they are in the same link, and a mode in which the objects of printing are further limited, and only screens that are in the same link as the currently displayed screen (that is to say, that are link destinations of the currently displayed screen) and whose category is the same as the category of the currently displayed screen are printed. Here, the former mode will be referred to as "Non-Intra-Link Category Print", and the latter mode as "Intra-Link Category Print". The former is useful when, for example, a user wishes to print unconditionally all screens of the same category not yet viewed, and the latter is useful when, for example, a user wishes to print screens of the same category not yet viewed, limited to those in the same link.

In the example shown in FIG. 15, when a Category Print command is issued in currently displayed screen A, only "news" category screen A, screen B, and screen C are printed. In this case, the result is the same for both Intra-Link Category Print and Non-Intra-Link Category Print.

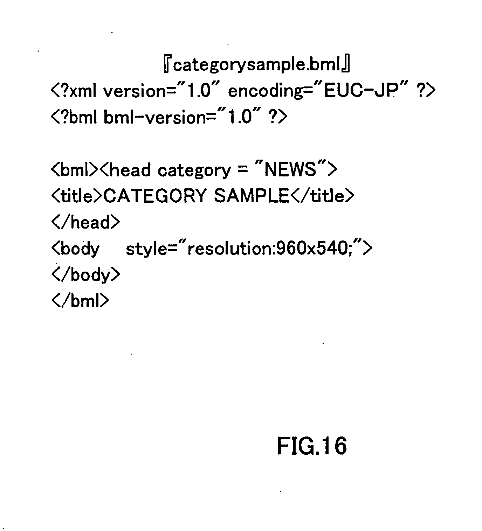

In order to implement this kind of Category Print, a category attribute is added to the header part of a BML file (for example, a new attribute "category" is added to the <head> element). FIG.16 shows an example, "categorysample.bml", of a BML file to which a new attribute "category" has been added to the header part (unrelated to display). With this "categorysample.bml", the <head> element "category" attribute is "news". Therefore, when, for example, an Intra-Link Category Print command is issued during display of this BML file, only screens to which there is a link from this BML file and that have the "news" category are printed.

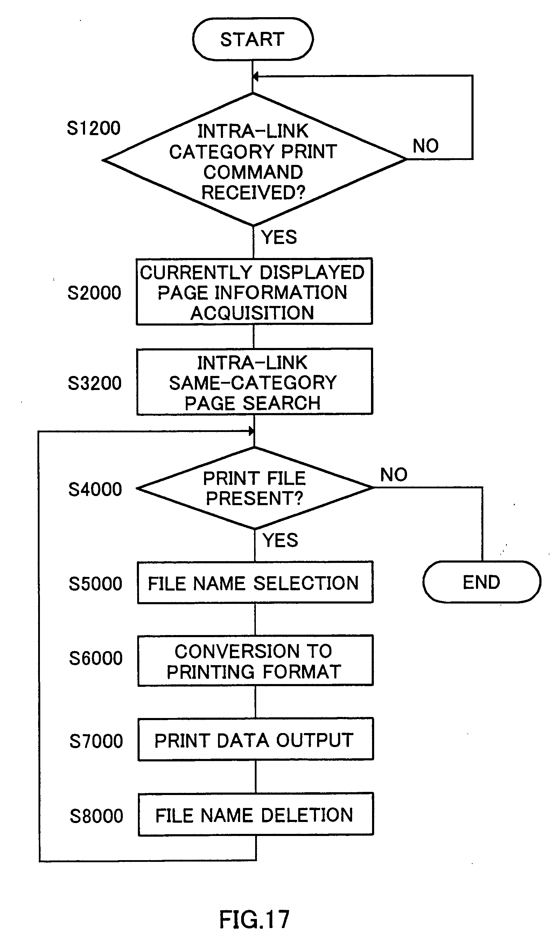

FIG.17 is a flowchart showing an example of the operation of the receiver 100 when an Intra-Link Category Print command is received from a user. The flowchart shown in FIG.17 is stored in ROM or the like as a control program, and is executed by the CPU.

In this operation example, as shown in FIG.17, a Step S1200 and Step S3200 are inserted in the flowchart shown in FIG.4, and Step S1000 and Step S3000 are deleted from that flowchart.

First, in Step S1200, a user command (operation input) from the remote controller 160 or the like is decoded, and it is determined whether or not an Intra-Link Category Print command has been received. If the result of this determination is that an Intra-Link Category Print command has been received (S1200: YES), the processing flow proceeds to Step S2000, and if the result of this determination is that an Intra-Link Category Print command has not been received (S1200: NO), the system stands by.

Step S2000 is the same as the corresponding step in the flowchart shown in FIG.4, and therefore its description is omitted here.

Then, in Step S3200, in the BML parsing section 120, on the one hand the link analysis section 122 performs link analysis from the currently displayed page and sequentially searches for link destinations, and on the other hand the attribute analysis section 124 performs analysis of attribute "category" added to BML files, and based on the link analysis results and attribute "category" analysis results, a search is performed for screens that are link destinations of the currently displayed screen and are screens of the same category as the currently displayed screen, and search result file names are recorded serially in the print file name list storage section 118. Thus, only file names of screens that are of the same category and in the same link are recorded in the print file name list storage section 118. In the search processing, a list of file names of BML files for which link analysis by the link analysis section 122 has already finished can be stored in the analysis intermediate data storage section 126, for example. Then, when the search is completed, the processing flow proceeds to Step S4000. Link analysis can be performed by means of the same kind of method as the link destination page finding method described above.

The actual processing procedure for the search algorithm in Step S3200 is arbitrary, and not restricted in any particular way.

Step S4000 through Step S8000 are the same as the corresponding steps in the flowchart shown in FIG.4, and therefore a description of these steps is omitted here.

Thus, according to this operation example, the currently displayed screen and some only (screens of the same category in the same link) of the screens related thereto can be printed by means of a single operation.

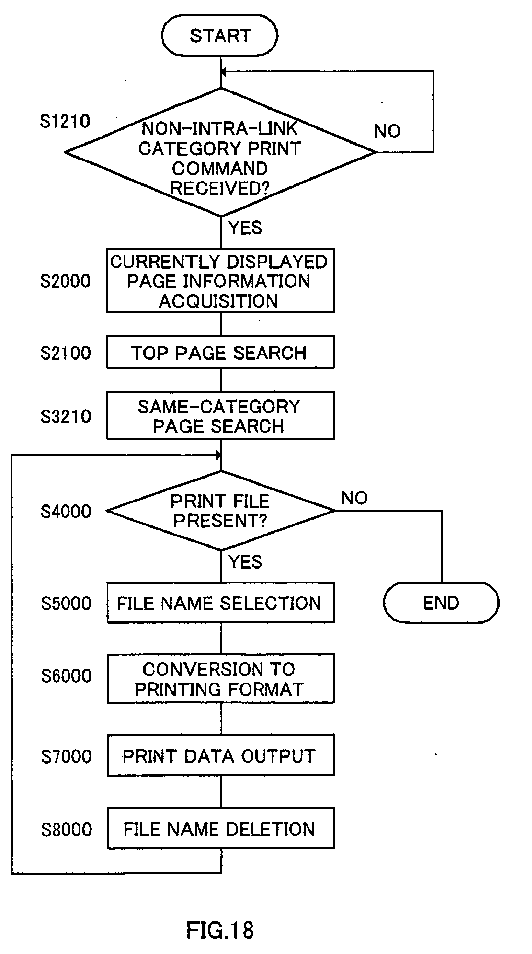

Next, FIG.18 is a flowchart showing an example of the operation of the receiver 100 when a Non-Intra-Link Category Print command is received from a user. The flowchart shown in FIG.18 is stored in ROM or the like as a control program, and is executed by the CPU.

In this operation example, as shown in FIG.18, a Step S1210, Step S2100, and Step S3210 are inserted in the flowchart shown in FIG.4, and Step S1000 and Step S3000 are deleted from that flowchart.

First, in Step S1210, a user command (operation input) from the remote controller 160 or the like is decoded, and it is determined whether or not a Non-Intra-Link Category Print command has been received. If the result of this determination is that a Non-Intra-Link Category Print command has been received (S1210: YES), the processing flow proceeds to Step S2000, and if the result of this determination is that a Non-Intra-Link Category Print command has not been received (S1210: NO), the system stands by.

Step S2000 is the same as the corresponding step in the flowchart shown in FIG.4, and Step S2100 is the same as the corresponding step in the flowchart shown in FIG.6; therefore, a description of these steps is omitted here. The processing order of Step S2000 and Step S2100 may be reversed.

Then, in Step S3210, in the BML parsing section 120, on the one hand the link analysis section 122 performs link analysis from the top page and sequentially searches for link destinations, and on the other hand the attribute analysis section 124 performs analysis of attribute "category" added to BML files, and based on the link analysis results and attribute "category" analysis results, a search is performed for screens that are of the same category as the currently displayed screen, and search result file names are recorded serially in the print file name list storage section 118. Then, when the search is completed, the processing flow proceeds to Step S4000. Thus, only file names of screens that are of the same category are recorded in the print file name list storage section 118. In the search processing, a list of file names of BML files for which link analysis by the link analysis section 122 has already finished can be stored in the analysis intermediate data storage section 126, for example. Link analysis can be performed by means of the same kind of method as the link destination page finding method described above.

The actual processing procedure for the search algorithm in Step S3210 is arbitrary, and not restricted in any particular way.

Step S4000 through Step S8000 are the same as the corresponding steps in the flowchart shown in FIG.4, and therefore a description of these steps is omitted here.

Thus, according to this operation example, the currently displayed screen and some only (screens of the same category) of the screens related thereto can be printed by means of a single operation.

As "Category Print" limits the objects of printing, it can be used together with any other function except "Print All".

### (4) "Importance Print"

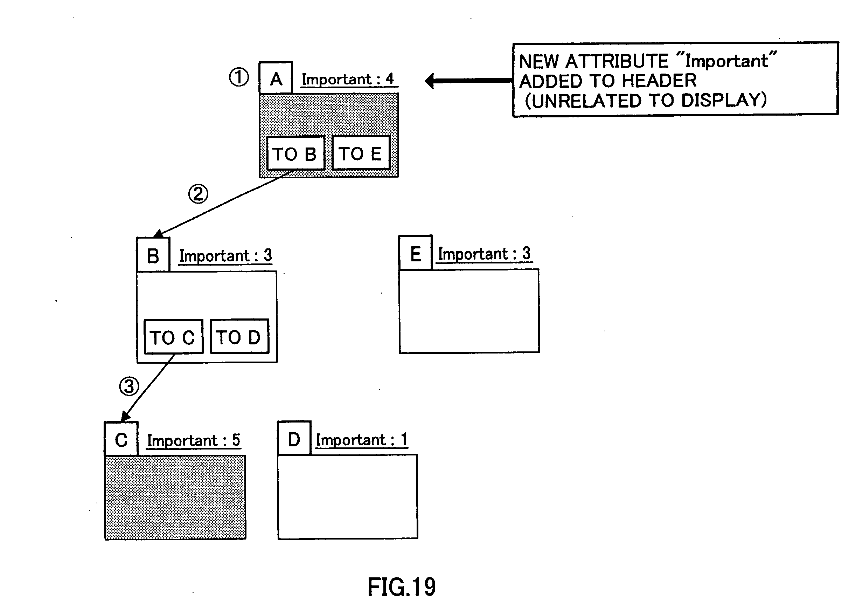

FIG. 19 is a drawing for explaining "Importance Print" in outline, and shows the processing contents when an "Importance Print" command is output in currently displayed screen A. Here, the "Importance Print" command is a command for printing only screens that are some of a related plurality of screens (in the case of data broadcast screens, all data broadcast screens composing an arbitrary data broadcast program) and whose importance is the same as or higher than the importance of the currently displayed screen (hereinafter also referred to as "screens of high importance"). To be more precise, "Importance Print" has a mode in which only screens whose importance is the same as or higher than the importance of the currently displayed screen are printed, regardless of whether or not they are in the same link, and a mode in which the objects of printing are further limited, and only screens that are in the same link as the currently displayed screen (that is to say, that are link destinations of the currently displayed screen) and whose importance is the same as or higher than the importance of the currently displayed screen are printed. Here, the former mode will be referred to as "Non-Intra-Link Importance Print", and the latter mode as "Intra-Link Importance Print". The former is useful when, for example, a user wishes to print unconditionally all screens of high importance not yet viewed, and the latter is useful when, for example, a user wishes to print screens of high importance not yet viewed, limited to those in the same link.

In the example shown in FIG.19, when an Importance Print command is issued in currently displayed screen A, only screen A and screen C, which have an importance of 4 or above, are printed. In this case, the result is the same for both Intra-Link Importance Print and Non-Intra-Link Importance Print.

In order to implement this kind of Importance Print, a category attribute is added to the header part of a BML file (for example, a new attribute "important" is added to the <head> element), and this importance attribute is used to determine whether or not to print according to how high or low importance is. Here, importance can be set using a numeric value. Printing/non-printing criteria according to importance may be specified by the user (for example, "Do not print pages of lower importance than the currently displayed page", or "Print pages of higher importance than the currently displayed page (and of the "news" category)"). It is also possible to enable the user to specify importance (for example, enabling specification/input of importance for a displayed screen).

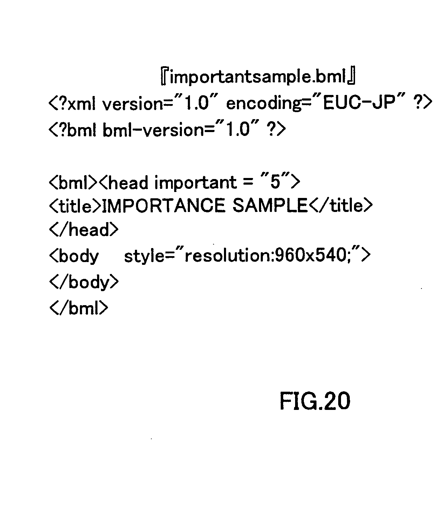

FIG.20 shows an example, "importantsample.bml", of a BML file to which a new attribute "important" has been added to the header part (unrelated to display) (in this example, importance is assumed to be indicated by an integer value from 0 to 9). With this "importantsample.bml", the <head> element "important" attribute is "5". Therefore, when, for example, an Intra-Link Importance Print command is issued during display of this BML file, only screens to which there is a link from this BML file and that have an importance attribute value of "5" or above are printed.

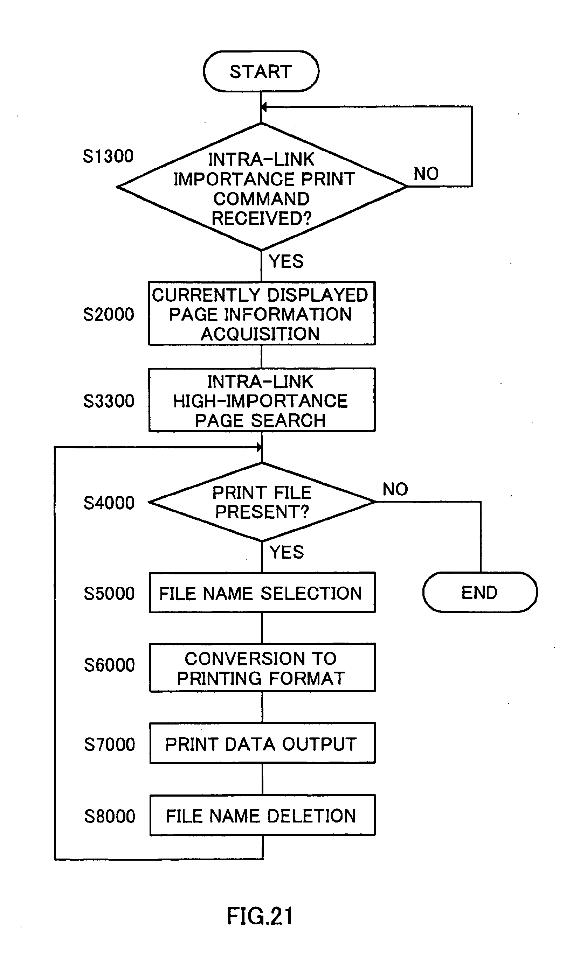

FIG.21 is a flowchart showing an example of the operation of the receiver 100 when an Intra-Link Importance Print command is received from a user. The flowchart shown in FIG.21 is stored in ROM or the like as a control program, and is executed by the CPU.

In this operation example, as shown in FIG.21, a Step S1300 and Step S3300 are inserted in the flowchart shown in FIG.4, and Step S1000 and Step S3000 are deleted from that flowchart.

First, in Step S1300, a user command (operation input) from the remote controller 160 or the like is decoded, and it is determined whether or not an Intra-Link Importance Print command has been received. If the result of this determination is that an Intra-Link Importance Print command has been received (S1300: YES), the processing flow proceeds to Step S2000, and if the result of this determination is that an Intra-Link Importance Print command has not been received (S1300: NO ) , the system stands by.

Step S2000 is the same as the corresponding step in the flowchart shown in FIG. 4, and therefore its description is omitted here.

Then, in Step S3300, in the BML parsing section 120, on the one hand the link analysis section 122 performs link analysis from the currently displayed page and sequentially searches for link destinations, and on the other hand the attribute analysis section 124 performs analysis of attribute "important" added to BML files, and based on the link analysis results and attribute "important" analysis results, a search is performed for screens that are link destinations of the currently displayed screen and are screens whose importance is the same as or higher than the importance of the currently displayed screen, and search result file names are recorded serially in the print file name list storage section 118. Thus, only file names of screens that are of high importance and in the same link are recorded in the print file name list storage section 118. In the search processing, a list of file names of BML files for which link analysis by the link analysis section 122 has already finished can be stored in the analysis intermediate data storage section 126, for example. Then, when the search is completed, the processing flow proceeds to Step S4000. Link analysis can be performed by means of the same kind of method as the link destination page finding method described above.

The actual processing procedure for the search algorithm in Step S3300 is arbitrary, and not restricted in any particular way.

Step S4000 through Step S8000 are the same as the corresponding steps in the flowchart shown in FIG.4, and therefore a description of these steps is omitted here.

Thus, according to this operation example, the currently displayed screen and some only (screens of high importance in the same link) of the screens related thereto can be printed by means of a single operation.

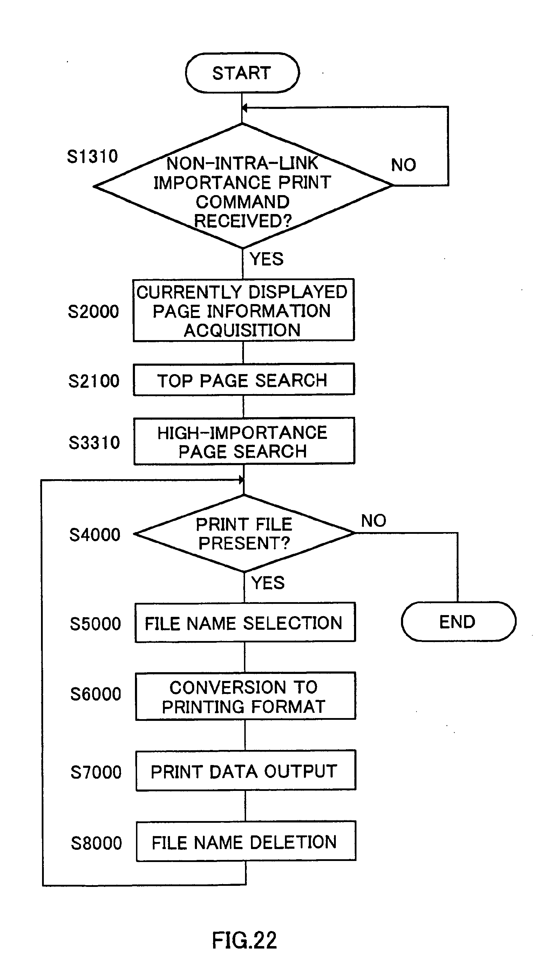

Next, FIG.22 is a flowchart showing an example of the operation of the receiver 100 when a Non-Intra-Link Importance Print command is received from a user. The flowchart shown in FIG.22 is stored in ROM or the like as a control program, and is executed by the CPU.

In this operation example, as shown in FIG.22, a Step S1310, Step S2100, and Step S3310 are inserted in the flowchart shown in FIG.4, and Step S1000 and Step S3000 are deleted from that flowchart.

First, in Step S1310, a user command (operation input) from the remote controller 160 or the like is decoded, and it is determined whether or not a Non-Intra-Link Importance Print command has been received. If the result of this determination is that a Non-Intra-Link Importance Print command has been received (S1310: YES), the processing flow proceeds to Step S2000, and if the result of this determination is that a Non-Intra-Link Importance Print command has not been received (S1310: NO), the system stands by.

Step S2000 is the same as the corresponding step in the flowchart shown in FIG.4, and Step S2100 is the same as the corresponding step in the flowchart shown in FIG. 6; therefore, a description of these steps is omitted here. The processing order of Step S2000 and Step S2100 may be reversed.

Then, in Step S3310, in the BML parsing section 120, on the one hand the link analysis section 122 performs link analysis from the top page and sequentially searches for link destinations, and on the other hand the attribute analysis section 124 performs analysis of attribute "important" added to BML files, and based on the link analysis results and attribute "important" analysis results, a search is performed for screens whose importance is the same as or higher than the importance of the currently displayed screen, and search result file names are recorded serially in the print file name list storage section 118. Then, when the search is completed, the processing flow proceeds to Step S4000. Thus, only file names of screens that are of high importance are recorded in the print file name list storage section 118. In the search processing, a list of file names of BML files for which link analysis by the link analysis section 122 has already finished can be stored in the analysis intermediate data storage section 126, for example. Link analysis can be performed by means of the same kind of method as the link destination page finding method described above.

The actual processing procedure for the search algorithm in Step S3310 is arbitrary, and not restricted in any particular way.

Step S4000 through Step S8000 are the same as the corresponding steps in the flowchart shown in FIG.4, and therefore a description of these steps is omitted here.

Thus, according to this operation example, the currently displayed screen and some only (screens of high importance) of the screens related thereto can be printed by means of a single operation.

As " Importance Print" limits the objects of printing, it can be used together with any other function except "Print All".

### (5) "Merge Print"

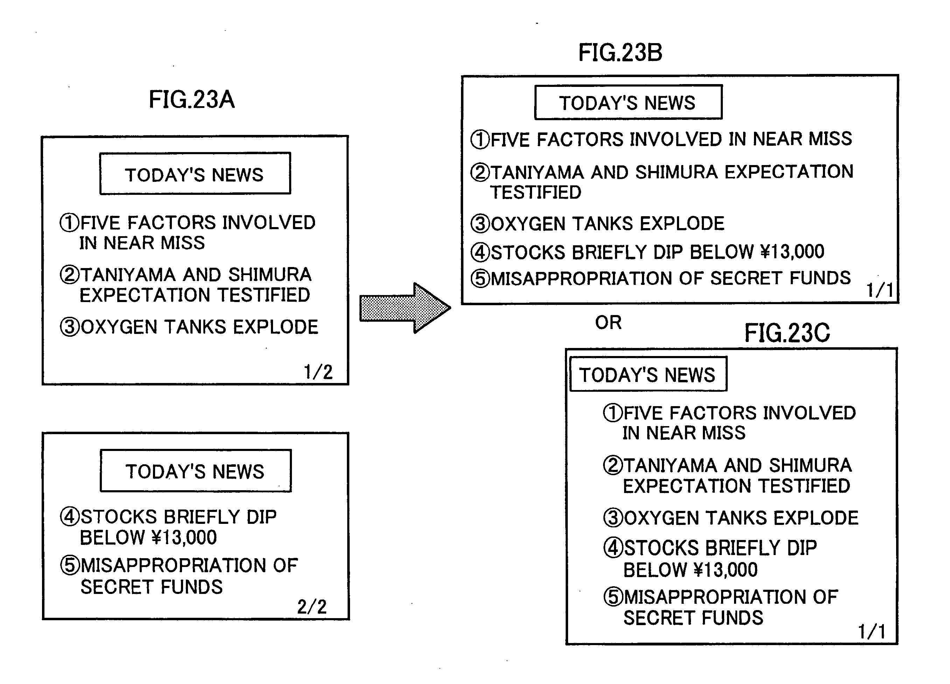

FIG.23 is a drawing for explaining "Merge Print" in outline.

"Merge Print" is a mode in which, when a plurality of pages are to be printed as in above-described "Print All", for example, and there are pages with almost the same contents or pages that can be combined, all or some of these are printed merged (integrated) on prescribed pages. As in the case of printing based on special printing conditions (see FIG.9), for example, this Merge Print is implemented by having data received from the print BML parser section 128 processed by the printer control section 130 in accordance with a predetermined algorithm.

For example, in a case where there are items ① through ⑤ for a single heading, as shown in FIG.23A, with ① through ③ located in the first page and ④ and ⑤ located in the second page, selecting Merge Print makes it possible to fit ① through ⑤ into a single page by reducing the font size and line-spacing, as shown in FIG.23B, or to fit ① through ⑤ into a single page by changing the print direction, as shown in FIG. 23C. Also, in a case (not shown) where there is only one line in the second page, that line can be fitted into a single page by reducing the font size and line-spacing.

Thus, according to Merge Print, where content spans a plurality of pages and that content is closely related, printing is performed with all or some of those pages merged into prescribed pages, making the contents easier to view for the user, and enabling the number of printed pages to be reduced.

"Merge Print" can be used together with any other function.

### (6) "Print Output Order Adjustment Print"

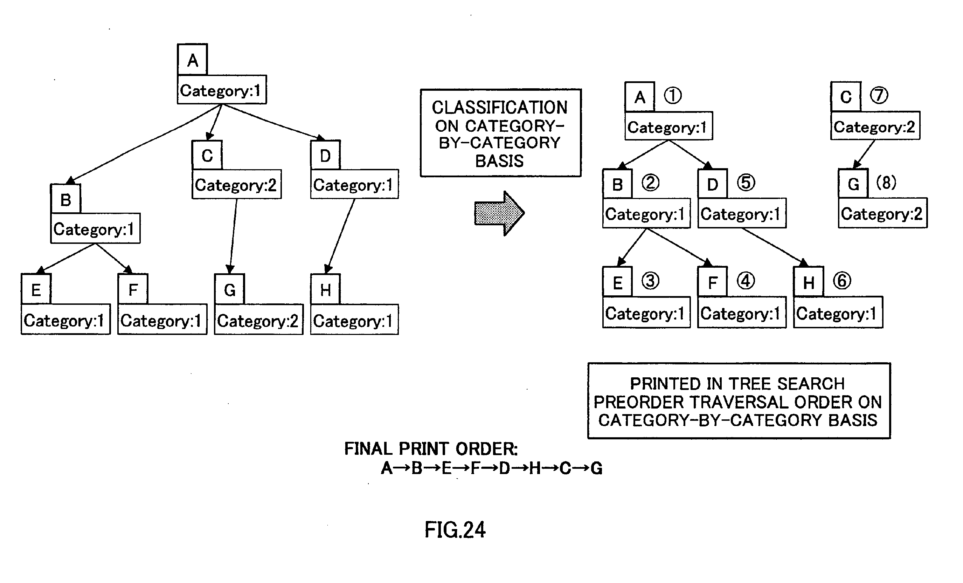

FIG. 24 is a drawing for explaining "Print Output Order Adjustment Print" in outline.

"Print Output Order Adjustment Print" is a mode in which printing is performed with the print output order changed so as to be more easily viewed by the user. Here, printing performed in in-passing order in a tree search (preorder traversal) on a category-by-category basis, in particular, will be referred to as "Basic Sort Print". That is to say, with "Basic Sort Print", printing is performed for each "category" attribute so that items of the same category are printed together, and at this time, the priority order of different categories is high-to-low order for the highest-level screen belonging to each category, and the priority order within the same category is high-to-low order in a sequential lateral direction in the search tree (so-called preorder traversal). The sort mode is not limited to "Basic Sort Print", but can be specified (selected) arbitrarily by the user from a plurality of printing orders.

In the example shown in FIG.24, when a Basic Sort Print command is issued, print objects A through H are first divided into groups on a category-by-category basis, after which the group containing top page A is put first (at this time the arrangement of other groups is arbitrary, but here, for example, printing is performed in order from the left side of the tree structure), and then preorder traversal printing is performed on a group-by-group basis, so that the final printing order is A → B → E → F → D → H → C → G.

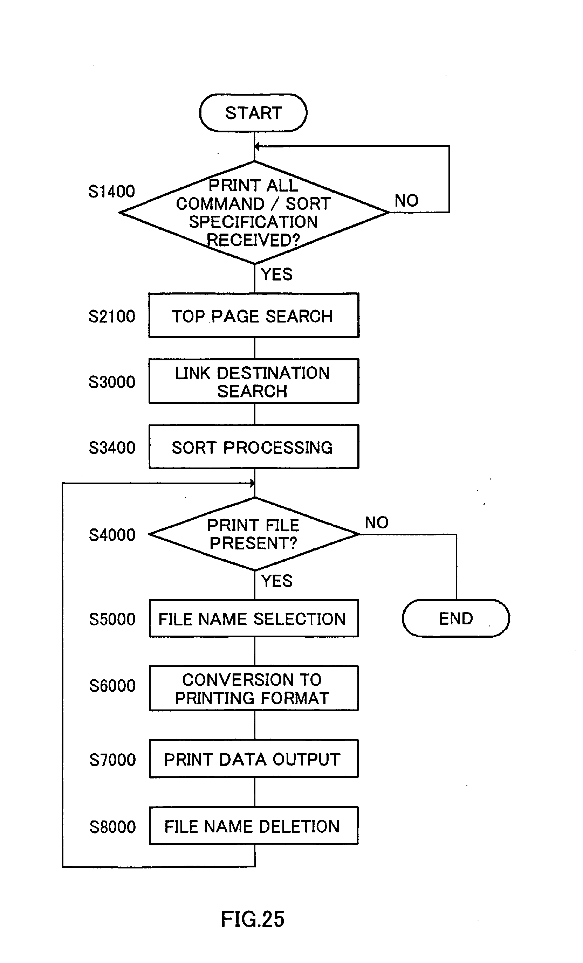

FIG.25 is a flowchart showing an example of the operation of the receiver 100 when Print All and Sort Specification commands are received from a user. The flowchart shown in FIG.25 is stored in ROM or the like as a control program, and is executed by the CPU.

In this operation example, as shown in FIG.25, a Step S1400 and Step S3400 are inserted in the flowchart shown in FIG.6, and Step S1000 is deleted from that flowchart.

First, in Step S1400, a user command (operation input) from the remote controller 160 or the like is decoded, and it is determined whether or not a Print All command and sort specification have been received. If the result of this determination is that a Print All command and sort specification have been received (S1400: YES), the processing flow proceeds to Step S2000, and if the result of this determination is that a Print All command and sort specification have not been received (S1400: NO), the system stands by.

Step S2100 and Step S3000 are the same as the corresponding steps in the flowchart shown in FIG.6, and therefore a description of these steps is omitted here. However, in this operation example, when the sort specification is for Basic Sort Print, for example, the link analysis section 122 sequentially searches for link destinations and the attribute analysis section 124 analyzes the "category" attribute, and the link analysis results and "category" attribute analysis results are recorded serially in the print file name list storage section 118. That is to say, in the case of Basic Sort Print, pairs of file names and categories are recorded in the print file name list storage section 118.

Then, in Step S3400, the printing order determination section 132 sorts file names in the print file name list storage section 118 into the user-specified printing order. In the case of Basic Sort Print, for example, file names in the print file name list storage section 118 are sorted into tree search preorder traversal order on a category-by-category basis. At this time, it is desirable for user confirmation to be carried out before and after the sort. Specifically, the current printing order should be presented to the user, and a user-specified sort executed based on the user's sort specification and its confirmation.

The actual processing procedures for the algorithms in Step S3000 and Step S3400 are arbitrary, and not restricted in any particular way, but in the case of Basic Sort Print, for example, the number of steps in the algorithms can be reduced by using the preorder traversal order in link analysis and retaining the search result order.

Step S4000 through Step S8000 are the same as the corresponding steps in the flowchart shown in FIG.4, and therefore a description of these steps is omitted here.

Thus, according to this function, when a plurality of pages are printed, print output can be obtained in an order that is easy for the user to view.

"Print Output Order Adjustment Print" can be used together with any other function, not only with "Print All".

### (7) "Output Destination Page Entry Print"

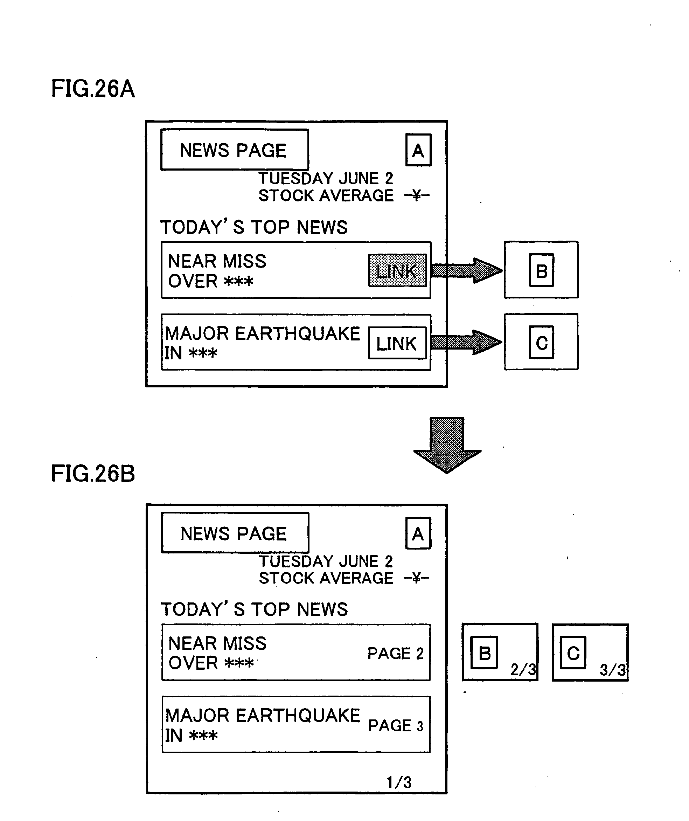

FIG.26 is a drawing for explaining "Output Destination Page Entry Print" in outline.

"Output Destination Page Entry Print" is a mode in which page numbers corresponding to the destinations of links are also printed on printed sheets of paper. FIG.26A shows the screen configuration of a particular data broadcast program, and FIG.26B shows the result of performing Output Destination Page Entry processing when Print All is performed for the data broadcast program shown in FIG.26A.

In the example shown in FIG.26, print object "News Page" (screen A) has two links, to "Near Miss Over ***" (screen B) and "Major Earthquake In ***" (screen C). By means of Print All, screen A is printed on the first page, screen B on the second page, and screen C on the third page, and therefore, when an Output Destination Page Entry Print command is issued, the output destination page numbers of "News Page" link destinations "Near Miss Over ***" and "Major Earthquake In ***" are entered at the locations of "Near Miss Over ***" and "Major Earthquake In ***", respectively, in the printout of "News Page" (screen A), so that these items are printed in the form "Near Miss Over *** Page 2" and "Major Earthquake In *** Page 3".

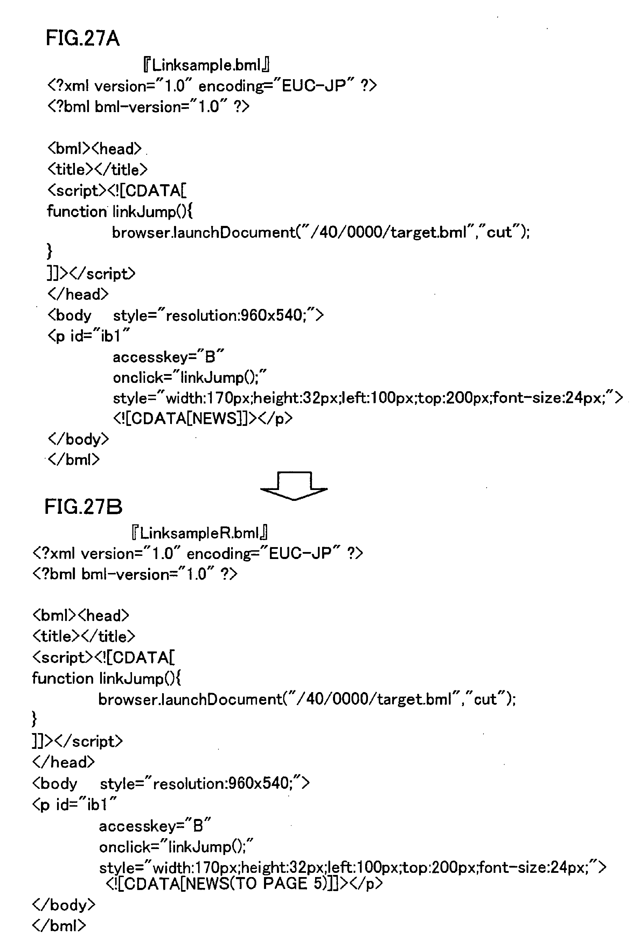

FIG.27 shows examples of a BML file before and after Output Destination Page Entry processing. When Output Destination Page Entry processing is performed for file "Linksample.bml" shown in FIG.27A, file "LinksampleR.bml" shown in FIG.27B is obtained.

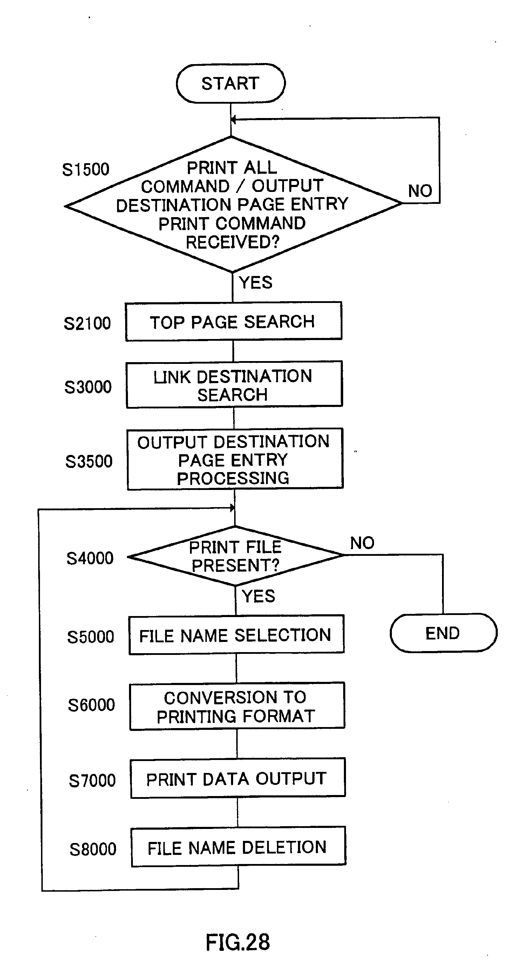

FIG.28 is a flowchart showing an example of the operation of a receiver when Print All and Output Destination Page Entry Print commands are received from a user. The flowchart shown in FIG.28 is stored in ROM or the like as a control program, and is executed by the CPU.

In this operation example, as shown in FIG.28, a Step S1500 and Step S3500 are inserted in the flowchart shown in FIG.6, and Step S1000 is deleted from that flowchart.

First, in Step S1500, a user command (operation input) from the remote controller 160 or the like is decoded, and it is determined whether or not a Print All command and Output Destination Page Entry Print command have been received. If the result of this determination is that a Print All command and Output Destination Page Entry Print command have been received (S1500: YES), the processing flow proceeds to Step S2100, and if the result of this determination is that a Print All command and Output Destination Page Entry Print command have not been received (S1500: NO), the system stands by.

Step S2100 and Step S3000 are the same as the corresponding steps in the flowchart shown in FIG.6, and therefore a description of these steps is omitted here.

Then, in Step S3500, the output destination entry section 134 finds the page numbers of link destinations based on the file name order (printing order) in the print file name list storage section 118 and link information of each file for which link analysis results are obtained, and enters the page on which the link destination screen is printed in document data in the BML file (see FIG. 27). After Output Destination Page Entry processing, the BML file (see FIG. 27B) is passed to the print BML parser section 128.

The actual processing procedure for the algorithm in Step S3500 is arbitrary, and not restricted in any particular way.

Step S4000 through Step S8000 are the same as the corresponding steps in the flowchart shown in FIG.4, and therefore a description of these steps is omitted here. However, in this operation example, after Output Destination Page Entry processing by the output destination entry section 134, a BML file is passed to the print BML parser section 128. Also, the presence or otherwise of a print file can be determined, not by whether or not a file name is recorded in the print file name list storage section 118, but according to whether or not a BML file processed by the output destination entry section 134 is not output.

Thus, according to this operation example, the page number of each link destination is printed together with the link destination in the print results (printout), and print output can be obtained in a form that is easy for the user to view.

"Output Destination Page Entry Print" can be used together with any other function, not only with "Print All".

### (8) "Output Page Quantity Specification Print"

"Output Page Quantity Specification Print" is a mode in which printing is executed after adjusting the number of print pages so as to be within the user-specified number of pages.

An outline of "Output Page Quantity Specification Print" is as follows. The user first specifies the number of output pages. Then, after identifying the actual objects of printing with "Print All", "Category Print", or the like, various above-described functions are employed so that the printout fits into the specified number of pages (Output Page Quantity Adjustment processing). For example, "Merge Print" (see FIG.23) is performed if there are very similar pages, printing is performed by means of N-in-1 printing, Both Sides printing, or the like, so as to conform to the specified number of pages (see FIG.9), and pages with a low "important" attribute are excluded (see FIG.19). Then, when each kind of processing ends, the projected number of print pages is indicated to the user, the user decides whether to print in accordance with that result or to print only the number of pages specified by the user in top-down order, and printing is executed in accordance with the user's decision.

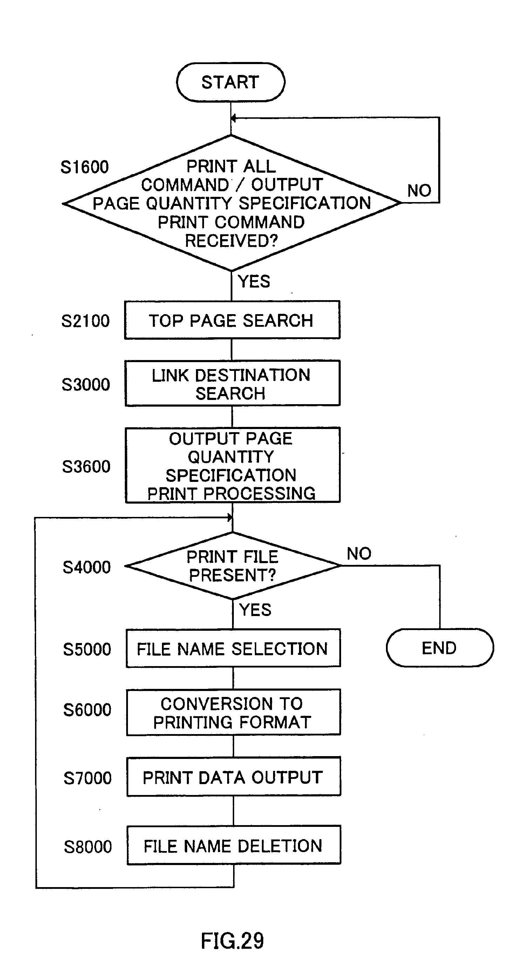

FIG.29 is a flowchart showing an example of the operation of the receiver 100 when Print All and Output Page Quantity Specification Print commands are received from a user. The flowchart shown in FIG.29 is stored in ROM or the like as a control program, and is executed by the CPU.

In this operation example, as shown in FIG.29, a Step S1600 and Step S3600 are inserted in the flowchart shown in FIG.6, and Step S1000 is deleted from that flowchart.

First, in Step S1600, a user command (operation input) from the remote controller 160 or the like is decoded, and it is determined whether or not a Print All command and Output Page Quantity Specification Print command have been received. An Output Page Quantity Specification Print command includes a user-specified number of pages. If the result of this determination is that a Print All command and Output Page Quantity Specification Print command have been received (S1600: YES), the processing flow proceeds to Step S2100, and if the result of this determination is that a Print All command and Output Page Quantity Specification Print command have not been received (S1600: NO), the system stands by.

Step S2100 and Step S3000 are the same as the corresponding steps in the flowchart shown in FIG.6, and therefore a description of these steps is omitted here.

Then, in Step S3600, the above-described Output Page Quantity Specification Print processing is executed. Specifically, for example, calculation is first performed of the total number of pages of the files (print contents) recorded in the print file name list storage section 118, the projected number of pages is continually indicated to the user via the information presentation section 136, and the user selects the number of columns for printing. Then the projected number of pages at the present point in time is indicated, and the user is asked whether or not printing is to be executed. If the reply is not to print, the user is asked to input the number of output pages again (if the reply is to print, the print file name list storage section 118 is updated so that the recorded contents comprise only print file names). Then items ranking lowest in importance (for example, when importance is represented by a scale from 1 to 9, BML files with an importance of 1) are excluded. As a result, if the number of print pages is within the specified number of pages, the processing flow proceeds to print execution, and if the number of print pages is not within the specified number of pages, the projected number of pages at the present point in time is indicated, and the user is asked whether or not printing is to be executed. If the reply is to print, the print file name list storage section 118 is updated so that the recorded contents comprise only print file names. If the reply is not to print, the cutoff importance rank is raised (for example, from 1 to 2), and the number of print pages is further reduced by repeating the above-described processing.

The actual processing procedure for the algorithm in Step S3600 is arbitrary, and not restricted in any particular way.

Step S4000 through Step S8000 are the same as the corresponding steps in the flowchart shown in FIG.4, and therefore a description of these steps is omitted here.

Thus, according to this operation example, the number of print pages can be restricted to the specified number of pages, and interactive specification of the number of pages by the user can be implemented.

"Output Page Quantity Specification Print" can be used together with any other function, not only with "Print All".

### (9) "Selective Print"

"Selective Print" is a mode in which pages actually to be printed are displayed in list form (for example, as a list of thumbnail representations or titles), and only those pages selected by the user are printed. Here, "Selective Print" will be referred to as "Title Selective Print" when implemented by means of selection from a list of titles, and as "Thumbnail Selective Print" when implemented by means of thumbnail selection. In "Selective Print", the user can specify a plurality of pages.

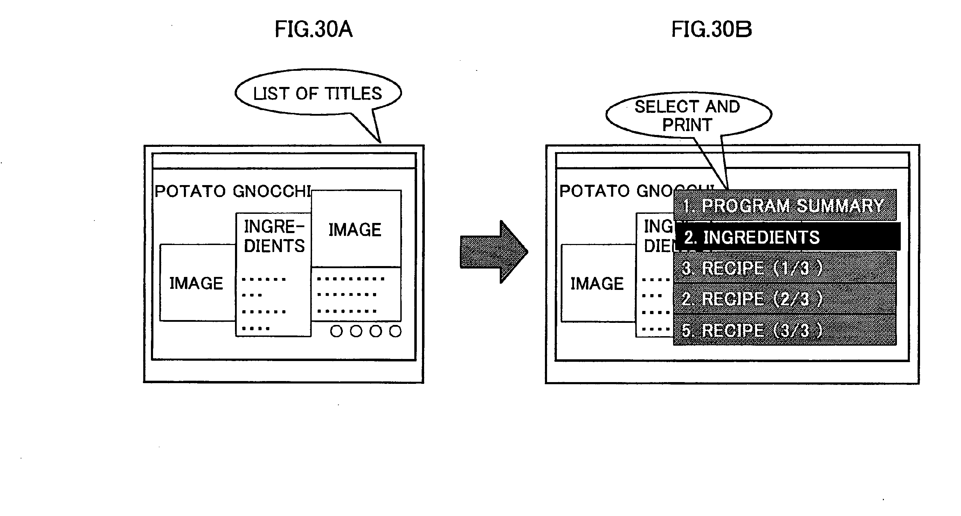

FIG.30 is a drawing for explaining "Title Selective Print" in outline. When a Title Selective Print command is issued in the screen shown in FIG.30A, for example, a title list of all screens subject to printing is displayed superimposed on the currently displayed screen, as shown in FIG. 30B for example, and only the screen or screens (multiple selections are permitted) corresponding to the title(s) selected by the user is(are) printed.

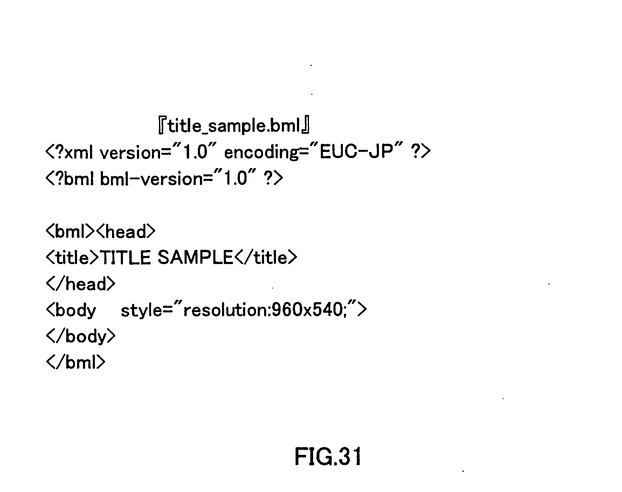

FIG.31 shows an example of a BML file, "title_sample.bml". With BML, a part enclosed by <title> and </title> is called a title element, and the title of the BML file is written there. Thus, in order to implement "Title Selective Print", a configuration should be provided whereby, before format conversion is performed by the print BML parser section 128, the <title> tags of all files subject to printing are extracted and a list of titles is presented to the user, and then only BML files corresponding to titles selected by the user are converted to the format for printing.

Also, in order to implement "Thumbnail Selective Print", a configuration should be provided whereby screens are initially converted to reduced images by the print BML parser section 128, reduced images after conversion are listed as thumbnail representations, and then only BML files corresponding to thumbnail representations selected by the user are converted to the format for printing.

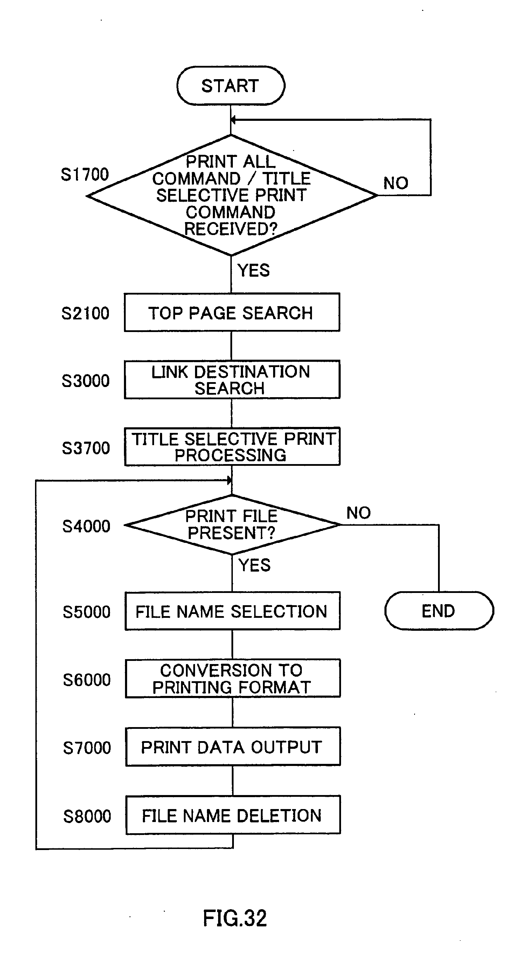

FIG.32 is a flowchart showing an example of the operation of the receiver 100 when Print All and Title Selective Print commands are received from a user. The flowchart shown in FIG.32 is stored in ROM or the like as a control program, and is executed by the CPU.

In this operation example, as shown in FIG.32, a Step S1700 and Step S3700 are inserted in the flowchart shown in FIG.6, and Step S1000 is deleted from that flowchart.

First, in Step S1700, a user command ( operation input) from the remote controller 160 or the like is decoded, and it is determined whether or not a Print All command and Title Selective Print command have been received. If the result of this determination is that a Print All command and Title Selective Print command have been received (S1700: YES), the processing flow proceeds to Step S2100, and if the result of this determination is that a Print All command and Title Selective Print command have not been received (S1700: NO), the system stands by.

Step S2100 and Step S3000 are the same as the corresponding steps in the flowchart shown in FIG.6, and therefore a description of these steps is omitted here.

Then, in Step S3700, the above-described Title Selective Print processing is executed. Specifically, for example, as partly described above, the BML parsing section 120 analyzes the <title> tags of all files subject to printing recorded in the print file name list storage section 118 and extracts their titles, and presents a list of titles to the user via the information presentation section 136. The system then waits for the user to make a selection, and then the contents of the print file name list storage section 118 are updated so that only the file names of BML files corresponding to the titles selected by the user are recorded.

The actual processing procedure for the algorithm in Step S3700 is arbitrary, and not restricted in any particular way.

Step S4000 through Step S8000 are the same as the corresponding steps in the flowchart shown in FIG.4, and therefore a description of these steps is omitted here.

Thus, according to this operation example, screens subject to printing are displayed as a list of titles and the user selects the screens that are actually to be printed, thus enabling the user to print only the screens he or she really wishes to print.

"Selective Print" can be used together with any other function, not only with "Print All".

As described above, according to an image information processing apparatus of this embodiment, it is possible to print all or some of a related plurality of screens (in the case of data broadcast screens, all data broadcast screens composing an arbitrary data broadcast program) by means of a single operation, and to greatly reduce the time and trouble required for printing. Specifically, the time and trouble involved in displaying other pages for printing can be reduced, and the time and trouble involved in issuing print commands for other pages can be reduced.

According to this embodiment, an image information processing apparatus for implementing the various above-described functions ("Print All", "Lower-Level Print", and so forth) is provided on the receiver 100 side, but this is not a limitation, and it is also possible for this image information processing apparatus to be provided on the printer 200 side.

Also, the various above-described functions based on the link following method can be applied not only to data broadcasting services in digital broadcasting, but also to existing Web pages. That is to say, although not shown in the drawings, an image information processing apparatus according to this embodiment can be incorporated into an Internet terminal (digital home appliance) that can be connected to the Internet.

In this case, since contents of Web pages on the Internet are written in a markup language called HTML (hypertext markup language), parts relating to BML among the component elements of the receiver 100 shown in FIG.1 are replaced by component elements relating to HTML. In an Internet terminal, for example, an HTML parsing section is provided instead of the BML parsing section 120, and a print HTML parser section instead of the print BML parser section 128. Also, an HTML browser section is provided instead of the digital broadcast receiving section 102, data carousel receiving section 104, and BML browser section 112. Normally, with an Internet terminal a television set 150 and remote controller 160 are not used, and a built-in display and operating section are provided.

Therefore, it is also possible to implement the various above-described functions - namely, "Print All", "Lower-Level Print", "Category Print", "Importance Print", "Merge Print", "Print Output Order Adjustment Print", "Output Destination Page Entry Print", "Output Page Quantity Specification Print", and "Selective Print" - with such an Internet terminal by means of the link following method, based on the same principles. However, with regard to "Lower-Level Print", in the case of Web pages directory information set in the Web page data is used as level information.

### (Embodiment 2)

Embodiment 2 is a case where not only the currently displayed data broadcast screen but also all or some related data broadcast screens are printed by means of a single operation, using the DDI reference method. As described above, the DII reference method can only be applied to data broadcasting services, and cannot be applied to existing Web pages.

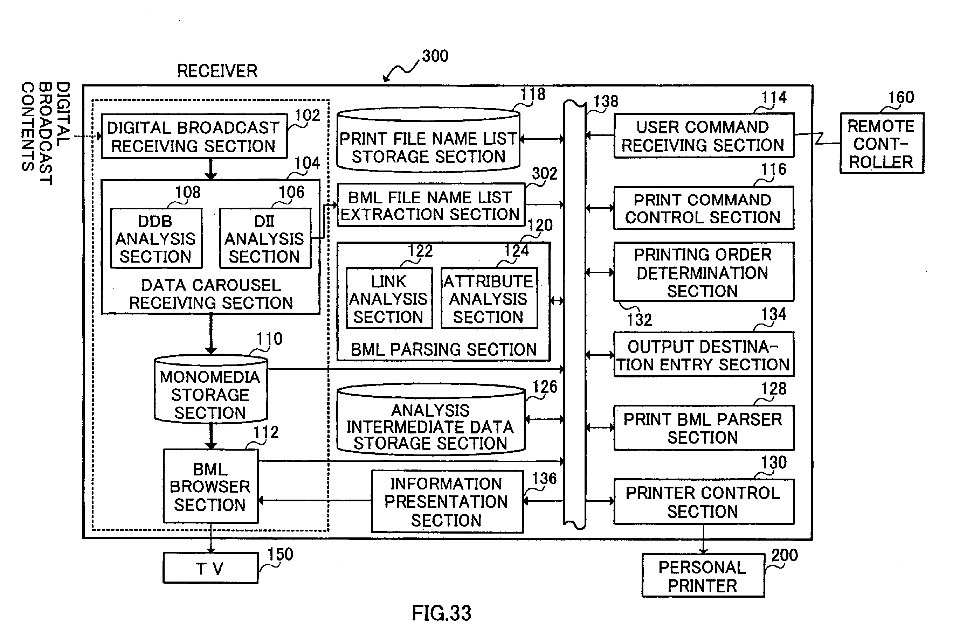

FIG.33 is a block diagram showing an example of the configuration of an image information processing apparatus according to Embodiment 2 of the present invention. This image information processing apparatus has the same basic configuration as the image information processing apparatus according to Embodiment 1 shown in FIG.1, and therefore identical component elements are assigned the same reference numbers as in FIG.1 and their detailed explanations are omitted.

A characteristic of this embodiment is that the receiver 300 composing an image information processing apparatus according to this embodiment has a BML file name list extraction section 302. The BML file name list extraction section 302 receives from a DII analysis section 106 a monomedia file name list transmitted in the currently selected channel by means of the data carousel method, and extracts from this list a BML file name list for data broadcast screens composing the data broadcast program of that channel. BML file name list extraction is performed by extracting all files with a ".bml" extension from the monomedia file name list (see FIG.2). As regards actual hardware, the BML file name list extraction section 302 is also configured by means of a CPU.

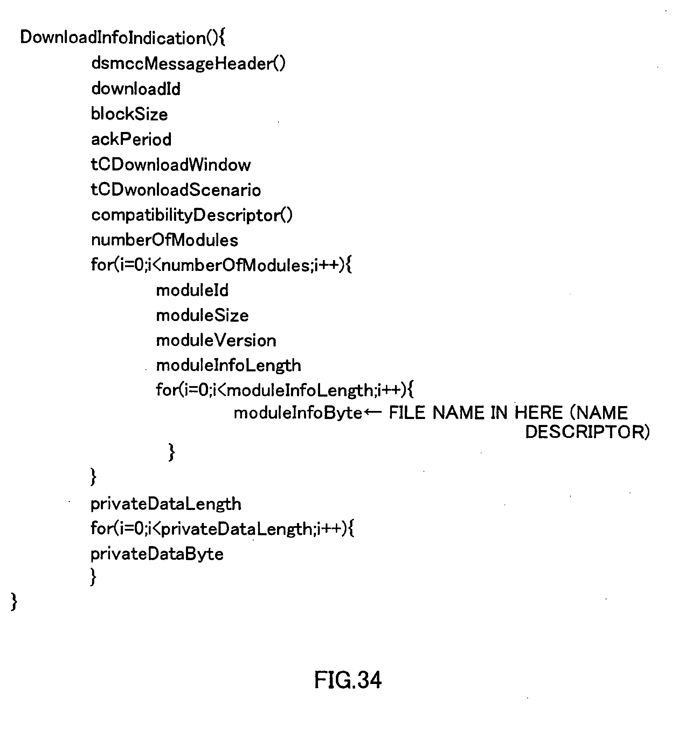

Here, the method of generating a monomedia file name list in the DII analysis section 106 is as follows. The data configuration of a DII message analyzed by the DII analysis section 106 is as shown in FIG.34. The file name (Name descriptor) is stored in "moduleInfoByte" in the structure shown in FIG.34. The DII analysis section 106 can generate a monomedia file name list by analyzing a DII message and storing the file names in "moduleInfoByte".

In addition to the method using the Name descriptor, another method of identifying a monomedia file name in a DII is to use a module ID and multipart header. In this case, a group of files composing a data broadcast is sent using a multipart format, and if module ID "0000" is the multipart format, it is expanded. In the multipart format header is written a list of file names of files included in this multipart. Thus, a monomedia file name list can also be extracted using this.

Therefore, with the DII reference method, "Print All" can be implemented by obtaining all file names composing a data broadcast from a data carousel method DII message (for example, a file name is written in Name descriptor in "moduleInfoByte" in a DII as described above), and printing all files with a ".bml" extension.

Since a print file name list is extracted from a DII in the DII reference method, unlike the case of the link following method "Print All" can be implemented at this time from any page without the need for any special measures (such as searching for the top page and searching for link destinations from the top page, for example, in the link following method). Thus, all the data broadcast screens of the relevant data broadcast program are printed even when a Print All command is issued in a one-way page that has no links to other pages.

Also, since a print file name list is extracted from a DII in the DII reference method, unlike the case of the link following method there is no possibility of duplicate recording of file names in the print file name list storage section 118. Thus, when files recorded in the print file name list storage section 118 are simply to be printed in top-down order, duplicate printing can be prevented, and there is no need for any special measures to prevent duplicate printing.

Since only file name and levels according to module ID are identified from a DII, when link information such as "link from A to B" is required, it is necessary to use the link following method together with the DII reference method. That is to say, with the link following method, all file names subject to printing are identified as a result of a link destination search, and linkage between pages such as "link from A to B" (link information) is also identified, whereas with the DII reference method, only all file names subject to printing (and levels according to module ID) are identified, and therefore when information such as "link from A to B" is necessary, and only then, the link following method is used together with the DII reference method. Therefore, in this embodiment, also, a link analysis section 122 is provided in the BML parsing section 120.

Next, the operation of a receiver 300 that has the above configuration will be described function by function. Here, as with Embodiment 1, the "Print All", "Lower-Level Print", "Category Print", "Importance Print", "Merge Print", "Print Output Order Adjustment Print", "Output Destination Page Entry Print", "Output Page Quantity Specification Print", and "Selective Print" functions will be described below in that order. Descriptions of parts common to Embodiment 1 are omitted.

### (1) "Print All"

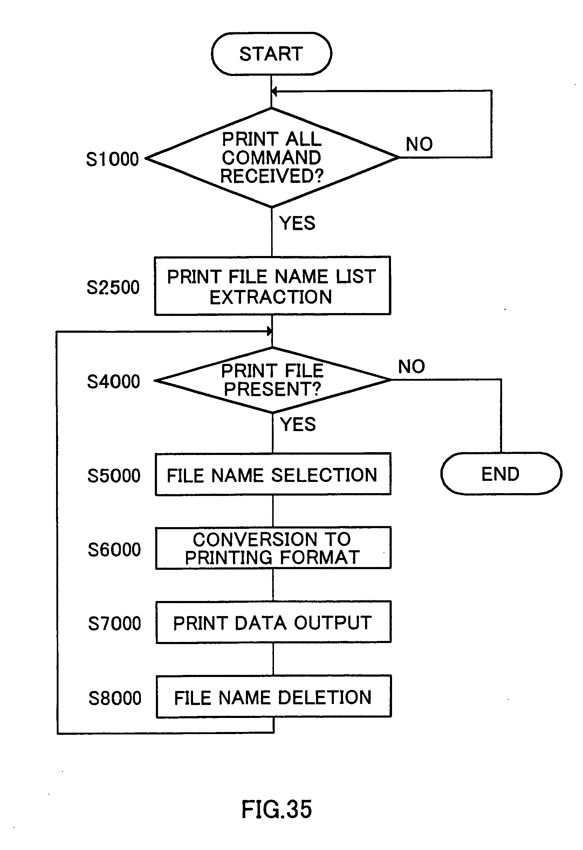

FIG.35 is a flowchart showing an example of the operation of the receiver 300 when a Print All command is received from a user. The flowchart shown in FIG.35 is stored in ROM or the like as a control program, and is executed by the CPU.

In this operation example, as shown in FIG.35, a Step S2500 is inserted in the flowchart shown in FIG.4, and Step S2000 and Step S3000 are deleted from that flowchart.

Step S1000 is the same as the corresponding step in the flowchart shown in FIG. 4, and therefore its description is omitted here.

Then, in Step S2500, the BML file name list extraction section 302 generates a print file name list and stores this list in the print file name list storage section 118. That is to say, a monomedia file name list is received from the DII analysis section 106 and a data broadcast screen BML file name list is extracted from the received monomedia file name list, as described above. This extraction is performed by extracting all files with a ".bml" extension from the monomedia file name list. The extracted BML file name list is stored in the print file name list storage section 118 as a print file name list. Step S4000 through Step S8000 are the same as the corresponding steps in the flowchart shown in FIG.4, and therefore a description of these steps is omitted here.

Thus, according to this operation example, all the data broadcast screens composing an arbitrary data broadcast program can be printed by means of a single operation.

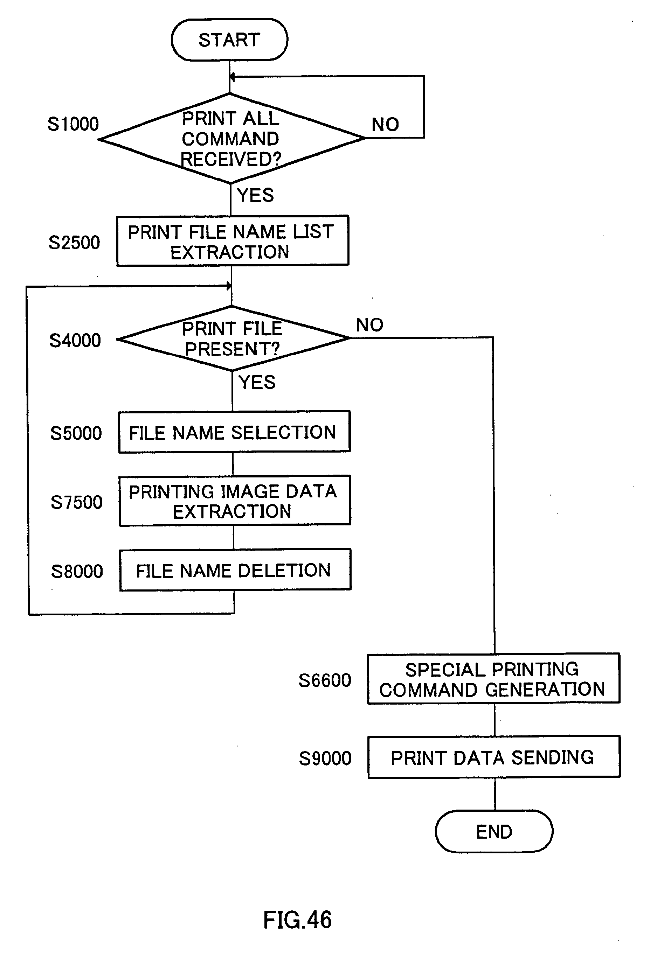

FIG.46 is a flowchart showing another example of the operation of the receiver 300 when a Print All command is received from a user. The flowchart shown in FIG.46 is stored in ROM or the like as a control program, and is executed by the CPU.

A characteristic of this operation example is that data broadcast screens are printed based on special printing conditions (such as N-in-1 printing, enlarged/reduced printing, or both-sides printing, for example). Therefore, a Step S6600, Step S7500, and Step S9000 as shown in FIG.46, for example, are inserted in the flowchart shown in FIG.35, and Step S6000 and Step S7000 are deleted from that flowchart.

Step S1000 through Step S5000 are the same as the corresponding steps in the flowchart shown in FIG.35, and therefore a description of these steps is omitted here. However, in this operation example, if, in Step 4000, there is no file to be printed (S4000: NO), the processing flow proceeds to Step S6600.

In Step S7500, print source data (image data for printing) in a BML file, etc., corresponding to the file name selected in Step S5000 is extracted in a format that can be interpreted by a printer 200 connected to the receiver 300.

Here, if, for example, the printer 200 can directly print BML files stored in the monomedia storage section 110, all that happens in Step S7500 is that BML data corresponding to the file name and image data used within this BML data are extracted from the monomedia storage section 110. The extracted data is sent to the printer control section 130 as print data.

If, on the other hand, the printer 200 cannot directly print BML files stored in the monomedia storage section 110, then as in Step S6000 in FIG.8, the BML file corresponding to the file name selected in Step S5000 is extracted from the monomedia storage section 110, and is converted by the print BML parser section 128 to a print format that can be printed on the printer 200. Any print format can be used, including, for example, a print description language (PDL) such as Postscript, an image format such as JPEG or PNG, or a tagging language such as HTML. After format conversion, data is sent to the printer control section 130 as print data.

Step S8000 is the same as the corresponding step in the flowchart shown in FIG.8, and therefore its description is omitted here.

In Step S6600, a special printing command that can be interpreted by the printer 200 is generated by the printer control section 130 based on special printing conditions specified by the user (such as N-in-1 printing, enlarged/reduced printing, or both-sides printing). This command stipulates how a series of print data sent together with or after the command is to be processed by the printer 200. The format of a special printing command is arbitrary, and not restricted in any particular way.

Then, in Step S9000, the special printing command generated in Step S6600 and print data extracted and received in Step S7500 are sent to the printer 200 via the printer control section 130. There are two possible sending methods: sending the special printing command and print data separately, or sending the special printing command and print data combined. With the method whereby the special printing command and print data are sent separately, for example, after an N-in-1 command has been sent, a plurality of print data are sent to the printer 200 independently on a page-by-page or job-by-job basis.

On receiving data sent in Step S9000, the printer 200 executes printing, based on the specified printing command, performing image processing such as enlargement/reduction or rotation, or rearrangement processing on the received data as necessary. For example, if the special printing command is for both-sides printing, print data is printed on both sides of the paper in the printout process.

Thus, according to this operation example, printing of data broadcast screens can be carried out for one or a plurality of data broadcast screens based on special printing conditions, and it is possible to implement N-in-1 printing, enlarged/reduced printing, both-sides printing, and so forth, of data broadcast screens.

As stated above, printing based on special printing conditions can be used not only in the case of "Print All", but also together with any other function.

### (2) "Lower-Level Print"

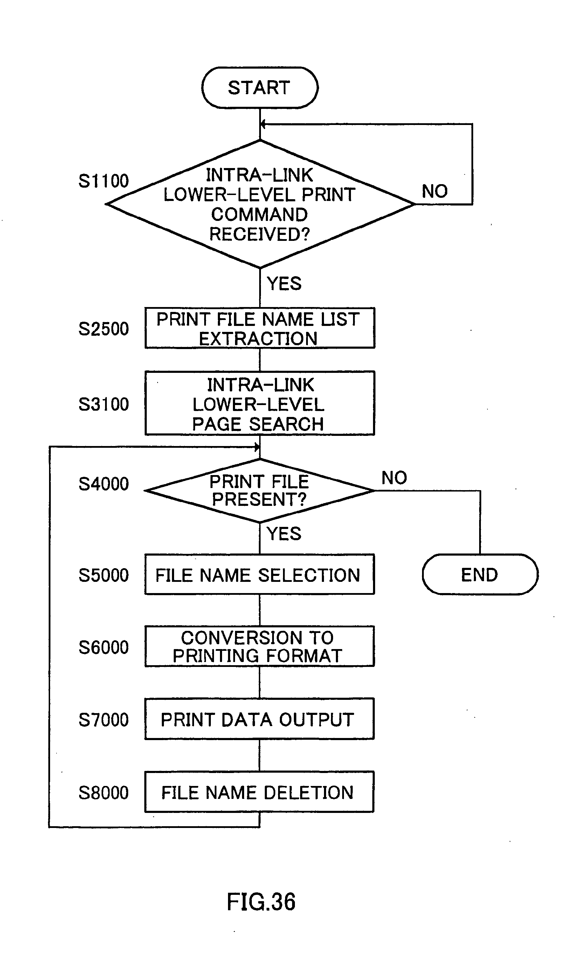

FIG.36 is a flowchart showing an example of the operation of the receiver 300 when an Intra-Link Lower-Level Print command is received from a user. The flowchart shown in FIG.36 is stored in ROM or the like as a control program, and is executed by the CPU.

In this operation example, as shown in FIG.36, a Step S2500 is inserted in the flowchart shown in FIG.12, and Step S2000 is deleted from that flowchart.

Step S1100 is the same as the corresponding step in the flowchart shown in FIG.12 and Step S2500 is the same as the corresponding step in the flowchart shown in FIG.35; therefore a description of these steps is omitted here.

Then, in Step S3100, the link analysis section 122 performs link analysis of files recorded in the print file name list storage section 118, and based on the link analysis results (link information) and level information set in each file (module ID, link-from-top-page level information, etc.), searches for screens that are link destinations of the currently displayed screen and are of a lower level than that currently displayed screen, and updates the print file name list storage section 118 based on the search results.

The actual processing procedure for the search algorithm in Step S3100 is arbitrary, and not restricted in any particular way.

Step S4000 through Step S8000 are the same as the corresponding steps in the flowchart shown in FIG.12, and therefore a description of these steps is omitted here.

Thus, according to this operation example, some only (lower-level screens in the same link) of the screens composing an arbitrary data broadcast program can be printed by means of a single operation.

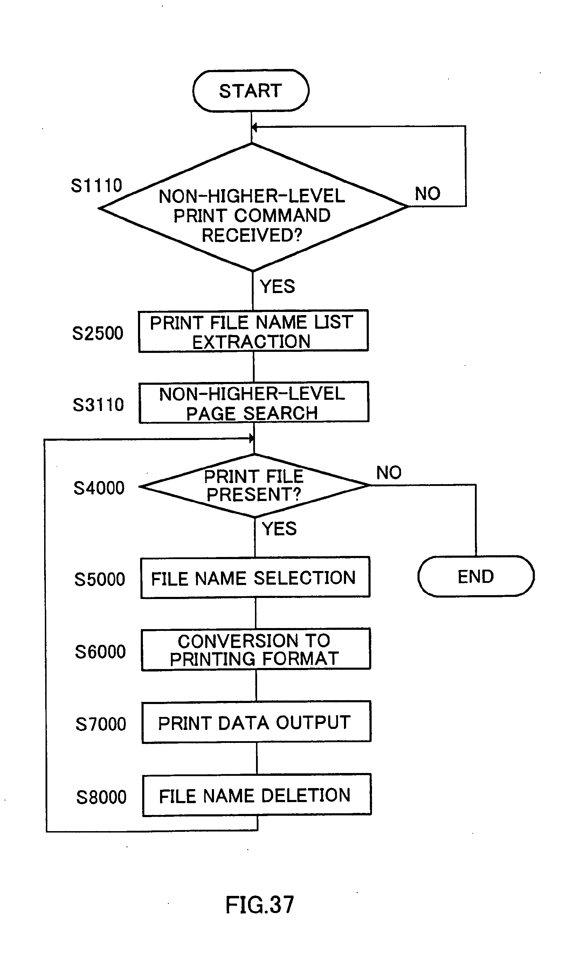

Next, FIG.37 is a flowchart showing an example of the operation of the receiver 300 when a Non-Higher-Level Print command is received from a user. The flowchart shown in FIG.37 is stored in ROM or the like as a control program, and is executed by the CPU.

In this operation example, as shown in FIG.37, a Step S2500 is inserted in the flowchart shown in FIG.14, and Step S2000 and Step S2100 are deleted from that flowchart.

Step S1110 is the same as the corresponding step in the flowchart shown in FIG.14, and Step S2500 is the same as the corresponding step in the flowchart shown in FIG. 35; therefore, a description of these steps is omitted here.

Then, in Step S3110, based on level information set in each file, a search is performed, among print file names recorded in the print file name list storage section 118, for screens whose level is the same as or lower than the level of the currently displayed screen, and the print file name list storage section 118 is updated based on the search results. Here, link analysis is unnecessary when module ID is used as level information, but link analysis is necessary when link-from-top-page level information is used.

The actual processing procedure for the search algorithm in Step S3110 is arbitrary, and not restricted in any particular way.

Step S4000 through Step S8000 are the same as the corresponding steps in the flowchart shown in FIG.14, and therefore a description of these steps is omitted here.

Thus, according to this operation example, some only (non-higher-level screens of the same level or below) of the data broadcast screens composing an arbitrary data broadcast program can be printed by means of a single operation.

As "Lower-Level Print" limits the objects of printing, it can be used together with any other function except "Print All".

### (3) "Category Print"

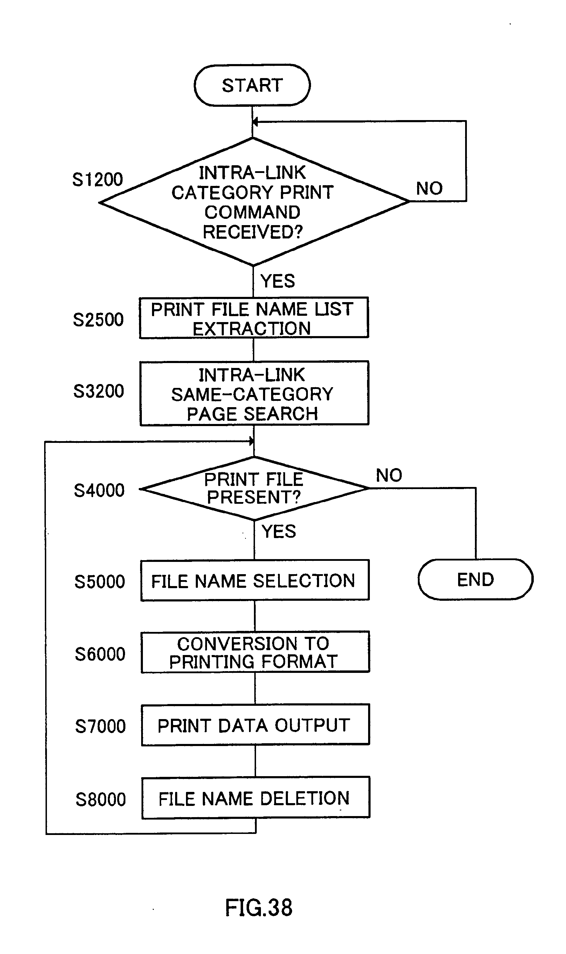

FIG.38 is a flowchart showing an example of the operation of the receiver 300 when an Intra-Link Category Print command is received from a user. The flowchart shown in FIG.38 is stored in ROM or the like as a control program, and is executed by the CPU.

In this operation example, as shown in FIG.38, a Step S2500 is inserted in the flowchart shown in FIG.17, and Step S2000 is deleted from that flowchart.

Step S1200 is the same as the corresponding step in the flowchart shown in FIG.17 and Step S2500 is the same as the corresponding step in the flowchart shown in FIG. 35; therefore a description of these steps is omitted here.

Then, in Step S3200, in the BML parsing section 120, on the one hand the link analysis section 122 performs link analysis of files recorded in the print file name list storage section 118, and on the other hand the attribute analysis section 124 performs analysis of attribute "category" added to each file, and based on the link analysis results (link information) and attribute "category" analysis results, a search is performed for screens that are link destinations of the currently displayed screen and are screens of the same category as the currently displayed screen, and the print file name list storage section 118 is updated based on the search results. Thus, only file names of screens that are of the same category and in the same link are recorded in the print file name list storage section 118.

The actual processing procedure for the search algorithm in Step S3200 is arbitrary, and not restricted in any particular way.

Step S4000 through Step S8000 are the same as the corresponding steps in the flowchart shown in FIG.17, and therefore a description of these steps is omitted here.

Thus, according to this operation example, some only (screens of the same category in the same link) of the data broadcast screens composing an arbitrary data broadcast program can be printed by means of a single operation.

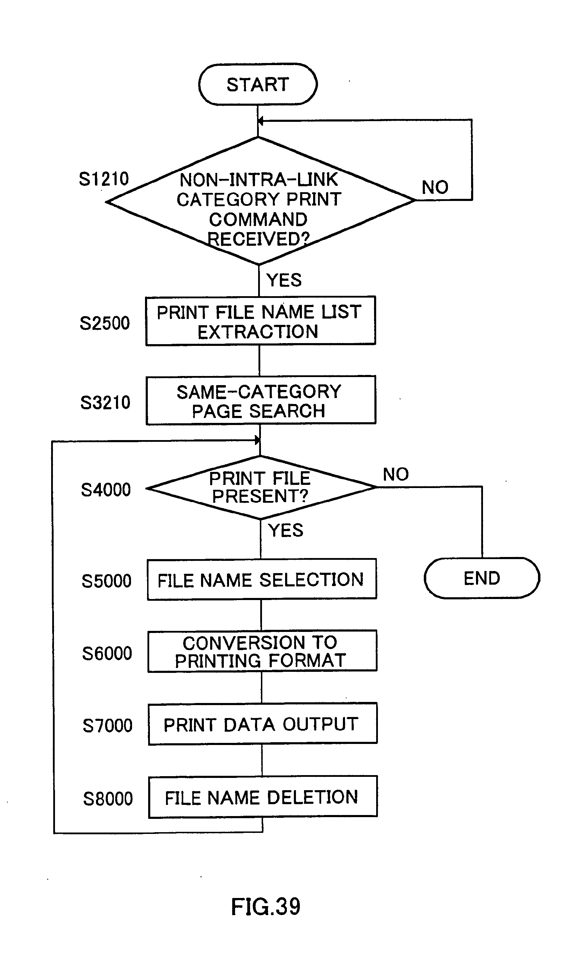

Next, FIG.39 is a flowchart showing an example of the operation of the receiver 300 when a Non-Intra-Link Category Print command is received from a user. The flowchart shown in FIG.39 is stored in ROM or the like as a control program, and is executed by the CPU.

In this operation example, as shown in FIG.39, a Step S2500 is inserted in the flowchart shown in FIG.18, and Step S2000 and Step S2100 are deleted from that flowchart.

Step S1210 is the same as the corresponding step in the flowchart shown in FIG.18, and Step S2500 is the same as the corresponding step in the flowchart shown in FIG.35; therefore, a description of these steps is omitted here.

Then, in Step S3210, the attribute analysis section 124 performs analysis of attribute "category" added to BML files recorded in the print file name list storage section 118, and based on the attribute "category" analysis results, a search is performed, among the file names recorded in the print file name list storage section 118, for screens that are of the same category as the currently displayed screen, and the print file name list storage section 118 is updated based on the search results. Thus, only file names of screens that are of the same category are recorded in the print file name list storage section 118.

The actual processing procedure for the search algorithm in Step S3210 is arbitrary, and not restricted in any particular way.

Step S4000 through Step S8000 are the same as the corresponding steps in the flowchart shown in FIG.18, and therefore a description of these steps is omitted here.

Thus, according to this operation example, some only (screens of the same category) of the data broadcast screens composing an arbitrary data broadcast program can be printed by means of a single operation.

As "Category Print" limits the objects of printing, it can be used together with any other function except "Print All".

### (4) "Importance Print"

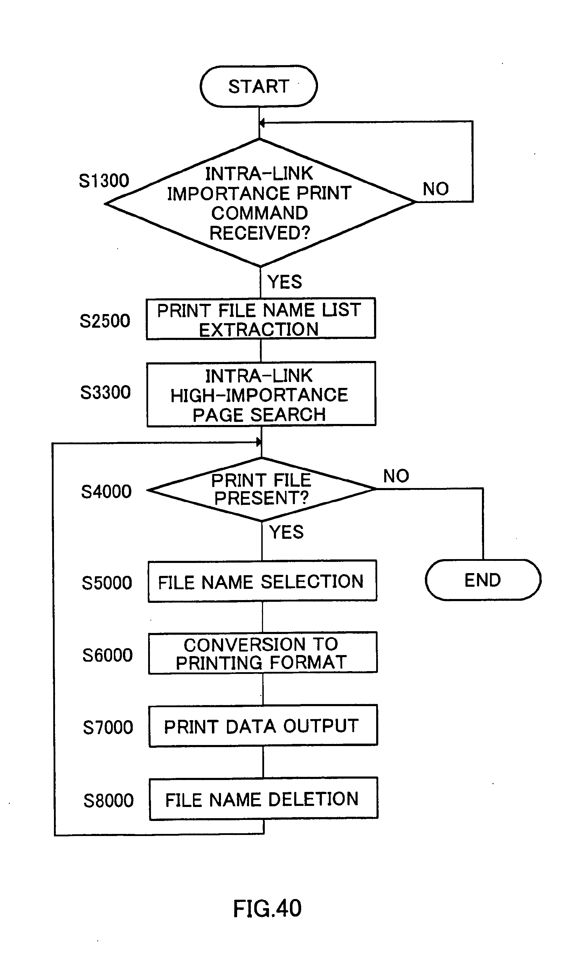

FIG.40 is a flowchart showing an example of the operation of the receiver 300 when an Intra-Link Importance Print command is received from a user. The flowchart shown in FIG.40 is stored in ROM or the like as a control program, and is executed by the CPU.

In this operation example, as shown in FIG.40, a Step S2500 is inserted in the flowchart shown in FIG.21, and Step S2000 is deleted from that flowchart.

Step S1300 is the same as the corresponding step in the flowchart shown in FIG.21 and Step S2500 is the same as the corresponding step in the flowchart shown in FIG.35; therefore a description of these steps is omitted here.

Then, in Step S3300, in the BML parsing section 120, on the one hand the link analysis section 122 performs link analysis of files recorded in the print file name list storage section 118, and on the other hand the attribute analysis section 124 performs analysis of attribute "important" added to each file, and based on the link analysis results (link information) and attribute "important" analysis results, a search is performed for screens that are link destinations of the currently displayed screen and are screens whose importance is the same as or higher than the importance of the currently displayed screen, and the print file name list storage section 118 is updated based on the search results. Thus, only file names of screens that are of high importance and in the same link are recorded in the print file name list storage section 118.

The actual processing procedure for the search algorithm in Step S3300 is arbitrary, and not restricted in any particular way.

Step S4000 through Step S8000 are the same as the corresponding steps in the flowchart shown in FIG.21, and therefore a description of these steps is omitted here.

Thus, according to this operation example, some only (screens of high importance in the same link) of the data broadcast screens composing an arbitrary data broadcast program can be printed by means of a single operation.

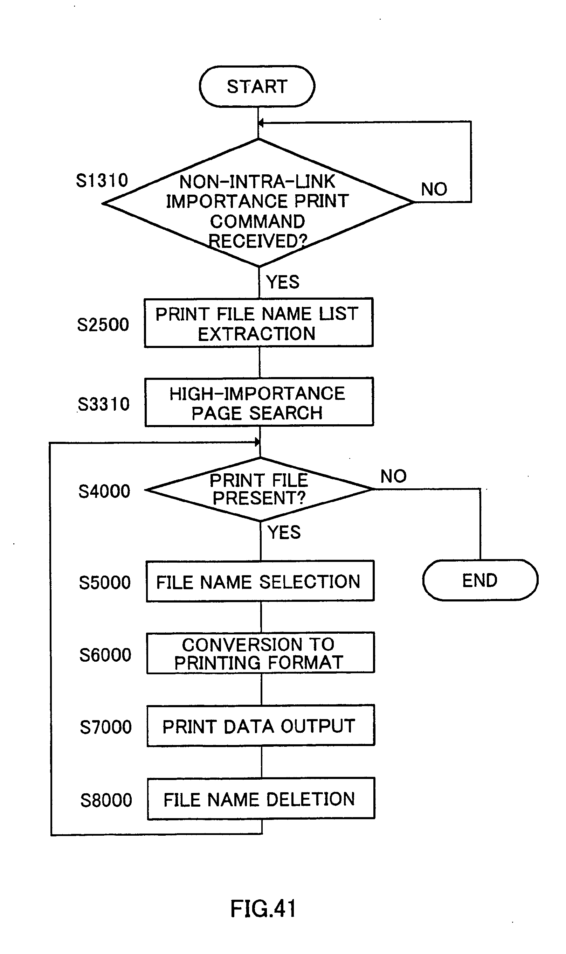

Next, FIG.41 is a flowchart showing an example of the operation of the receiver 300 when a Non-Intra-Link Importance Print command is received from a user. The flowchart shown in FIG.41 is stored in ROM or the like as a control program, and is executed by the CPU.

In this operation example, as shown in FIG.41, a Step S2500 is inserted in the flowchart shown in FIG.22, and Step S2000 and Step S2100 are deleted from that flowchart.

Step S1310 is the same as the corresponding step in the flowchart shown in FIG.22 and Step S2500 is the same as the corresponding step in the flowchart shown in FIG.35; therefore a description of these steps is omitted here.

Then, in Step S3310, the attribute analysis section 124 performs analysis of attribute "important" added to BML files recorded in the print file name list storage section 118, and based on the attribute "important" analysis results, a search is performed, among the file names recorded in the print file name list storage section 118, for screens whose importance is the same as or higher than the importance of the currently displayed screen, and the print file name list storage section 118 is updated based on the search results. Thus, only file names of screens that are of high importance are recorded in the print file name list storage section 118.

The actual processing procedure for the search algorithm in Step S3310 is arbitrary, and not restricted in any particular way.

Step S4000 through Step S8000 are the same as the corresponding steps in the flowchart shown in FIG.22, and therefore a description of these steps is omitted here.

Thus, according to this operation example, some only (screens of high importance) of the data broadcast screens composing an arbitrary data broadcast program can be printed by means of a single operation.

As "Importance Print" limits the objects of printing, it can be used together with any other function except "Print All".

### (5) "Merge Print"

Details of "Merge Print" are exactly the same as in Embodiment 1, and therefore a description of this function is omitted here.

"Merge Print" can be used together with any other function.

### (6) "Print Output Order Adjustment Print"

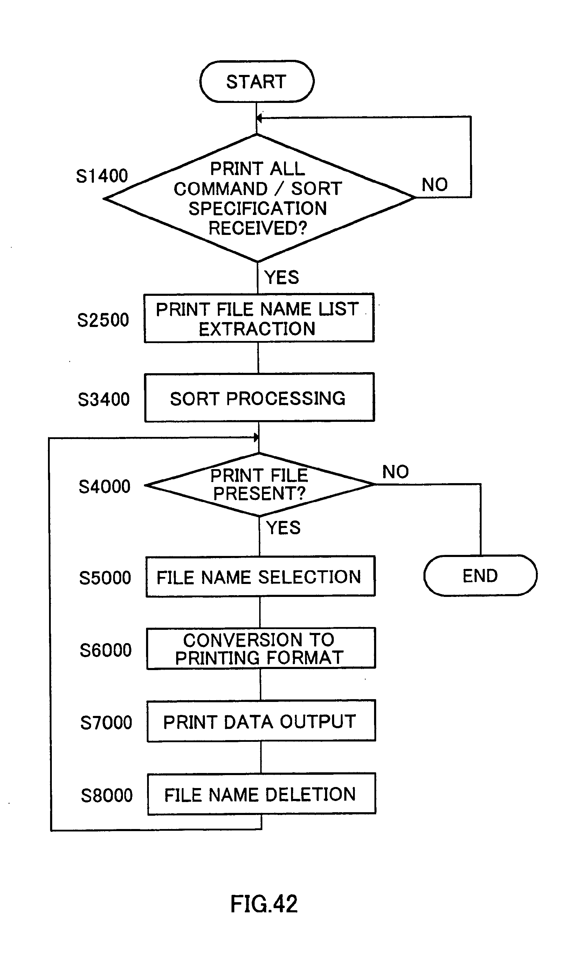

FIG.42 is a flowchart showing an example of the operation of the receiver 300 when Print All and Sort Specification commands are received from a user. The flowchart shown in FIG.42 is stored in ROM or the like as a control program, and is executed by the CPU.

In this operation example, as shown in FIG.42, a Step S2500 is inserted in the flowchart shown in FIG.25, and Step S2100 and Step S3000 are deleted from that flowchart.

Step S1400 is the same as the corresponding step in the flowchart shown in FIG.25 and Step S2500 is the same as the corresponding step in the flowchart shown in FIG.35; therefore a description of these steps is omitted here.

Then, in Step S3400, the printing order determination section 132 sorts file names in the print file name list storage section 118 into the user-specified printing order. In the case of Basic Sort Print, for example, file names in the print file name list storage section 118 are sorted into tree search preorder traversal order on a category-by-category basis. At this time, it is desirable for user confirmation to be carried out before and after the sort. Specifically, the current printing order should be presented to the user, and a user-specified sort executed based on the user's sort specification and its confirmation.

When the sort specification is for Basic Sort Print, for example, the link analysis section 122 performs link analysis of files recorded in the print file name list storage section 118 and the attribute analysis section 124 analyzes the "category" attribute of each file, and sorting is performed based on the link analysis results (link information) and "category" attribute analysis results.

The actual processing procedure for the algorithm in Step S3400 is arbitrary, and not restricted in any particular way.

Step S4000 through Step S8000 are the same as the corresponding steps in the flowchart shown in FIG.25, and therefore a description of these steps is omitted here.

Thus, according to this function, when a plurality of pages are printed, print output can be obtained in an order that is easy for the user to view.

"Print Output Order Adjustment Print" can be used together with any other function, not only with "Print All".

### (7) "Output Destination Page Entry Print"

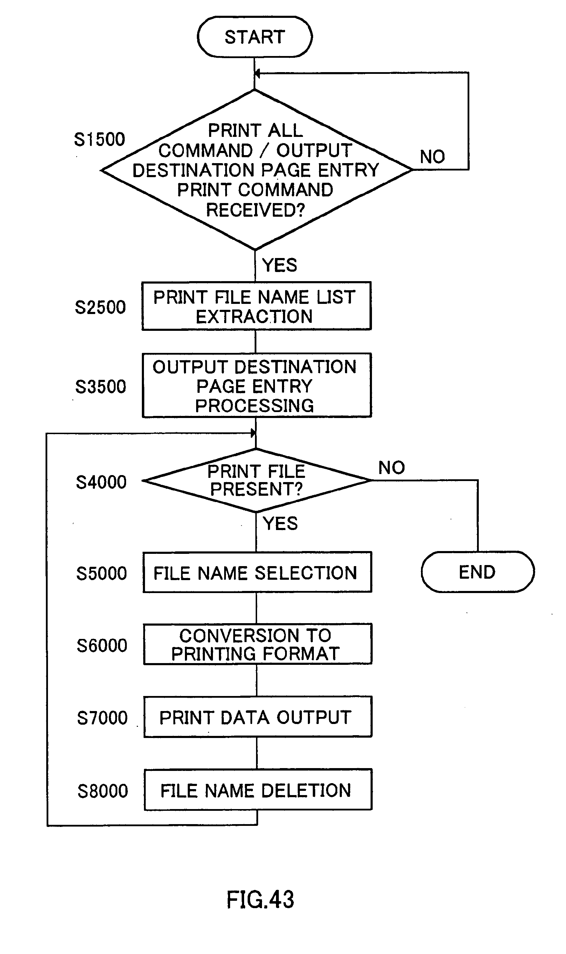

FIG.43 is a flowchart showing an example of the operation of the receiver 300 when Print All and Output Destination Page Entry Print commands are received from a user. The flowchart shown in FIG.43 is stored in ROM or the like as a control program, and is executed by the CPU.

In this operation example, as shown in FIG.43, a Step S2500 is inserted in the flowchart shown in FIG.28, and Step S2100 and Step S3000 are deleted from that flowchart.

Step S1500 is the same as the corresponding step in the flowchart shown in FIG.28 and Step S2500 is the same as the corresponding step in the flowchart shown in FIG.35; therefore a description of these steps is omitted here.

Then, in Step S3500, the output destination entry section 134 finds the page numbers of link destinations based on the file name order (printing order) in the print file name list storage section 118 and link information of each file for which link analysis results are obtained for files recorded in the print file name list storage section 118, and enters the page on which the link destination screen is printed in document data in the BML file. After Output Destination Page Entry processing, the BML file is passed to the print BML parser section 128.

The actual processing procedure for the algorithm in Step S3500 is arbitrary, and not restricted in any particular way.

Step S4000 through Step S8000 are the same as the corresponding steps in the flowchart shown in FIG.28, and therefore a description of these steps is omitted here.

Thus, according to this operation example, the page number of each link destination is printed together with the link destination in the print results (printout), and print output can be obtained in a form that is easy for the user to view. "Output Destination Page Entry Print" can be used together with any other function, not only with "Print All".

### (8) "Output Page Quantity Specification Print"

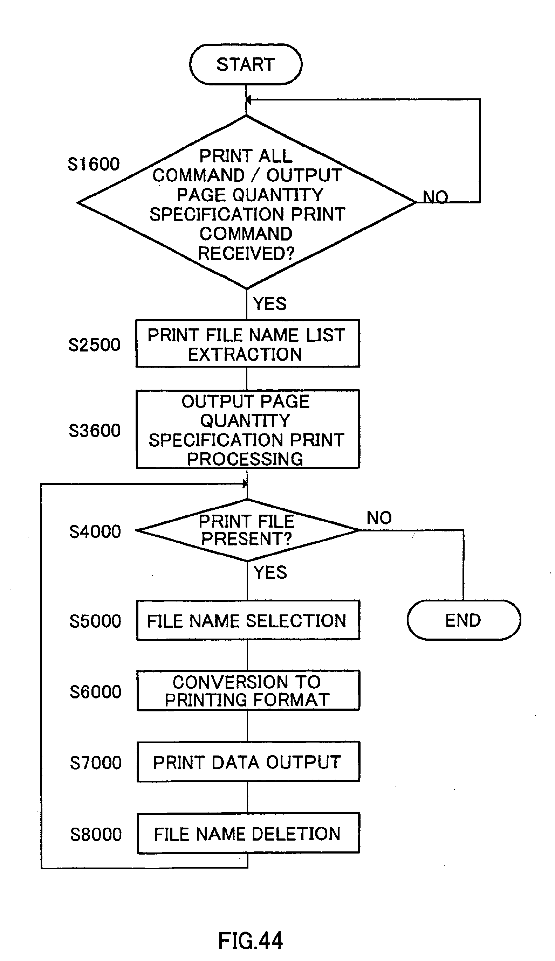

FIG.44 is a flowchart showing an example of the operation of the receiver 300 when Print All and Output Page Quantity Specification Print commands are received from a user. The flowchart shown in FIG.44 is stored in ROM or the like as a control program, and is executed by the CPU.

In this operation example, as shown in FIG. 44, a Step S2500 is inserted in the flowchart shown in FIG.29, and Step S2100 and Step S3000 are deleted from that flowchart.

Step S1600 is the same as the corresponding step in the flowchart shown in FIG.29 and Step S2500 is the same as the corresponding step in the flowchart shown in FIG.35; therefore a description of these steps is omitted here.

Step S3600 through Step S8000 are the same as the corresponding steps in the flowchart shown in FIG.29, and therefore a description of these steps is omitted here.

Thus, according to this operation example, the number of print pages can be restricted to the specified number of pages, and interactive specification of the number of pages by the user can be implemented.

"Output Page Quantity Specification Print" can be used together with any other function, not only with "Print All".

### (9) "Selective Print"

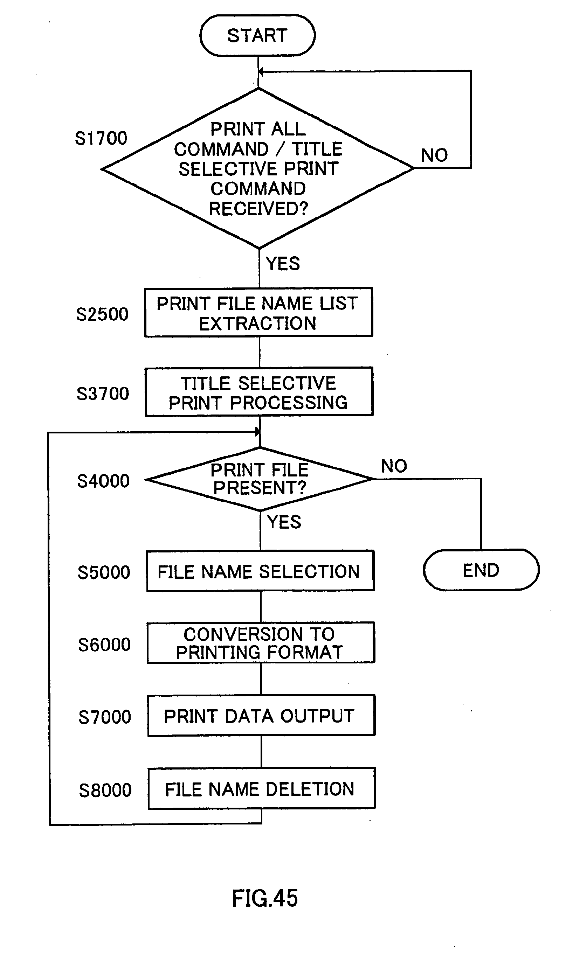

FIG.45 is a flowchart showing an example of the operation of the receiver 300 when Print All and Title Selective Print commands are received from a user. The flowchart shown in FIG.45 is stored in ROM or the like as a control program, and is executed by the CPU.

In this operation example, as shown in FIG.45, a Step S2500 is inserted in the flowchart shown in FIG.32, and Step S2100 and Step S3000 are deleted from that flowchart.

Step S1700 is the same as the corresponding step in the flowchart shown in FIG.32 and Step S2500 is the same as the corresponding step in the flowchart shown in FIG.35; therefore a description of these steps is omitted here.

Step S3700 through Step S8000 are the same as the corresponding steps in the flowchart shown in FIG.32, and therefore a description of these steps is omitted here.

Thus, according to this operation example, screens subject to printing are displayed as a list of titles and the user selects the screens that are actually to be printed, thus enabling the user to print only the screens he or she really wishes to print.

"Selective Print" can be used together with any other function, not only with "Print All".

As described above, according to an image information processing apparatus of this embodiment, it is possible to print all or some of the data broadcast screens composing an arbitrary data broadcast program by means of a single operation, and to greatly reduce the time and trouble required for printing. Specifically, the time and trouble involved in displaying other pages for printing can be reduced, and the time and trouble involved in issuing print commands for other pages can be reduced.

According to this embodiment, an image information processing apparatus for implementing the various above-described functions ("Print All", "Lower-Level Print", and so forth) is provided on the receiver 300 side, but this is not a limitation, and it is also possible for this image information processing apparatus to be provided on the printer 200 side.

As described above, according to the present invention it is possible to print all or some of a related plurality of screens by means of a single operation, and to greatly reduce the time and trouble required for printing.

The present invention is not limited to the above-described embodiments, and various variations and modifications may be possible without departing from the scope of the present invention.

This application is based on Japanese Patent Application No.2001-150034 filed on May 18, 2001 and Japanese Patent Application No.2001-341227 filed on November 6, 2001, entire contents of which are expressly incorporated by reference herein.

### Industrial Applicability

The present invention is ideally suited to the field of an image information processing apparatus and image information processing method.

## Claims

1. An image information processing apparatus, comprising:
extraction means (120) for extracting a screen related to a displayed screen from among a screen to be displayed; and
output means (128,130) for outputting image data corresponding to the screen extracted by said extraction means (120).

2. An image information processing apparatus, comprising:
link destination searching means (120) for searching for a link destination of a screen, based on link information set in data to be displayed in a screen; and
output means (128,130) for outputting image data corresponding to a screen of the link destination retrieved by said link destination searching means (120).

3. The image information processing apparatus according to claim 2, further comprising:
data name storing means for storing a name of data to be displayed in the screen of the link destination retrieved by said link destination searching means, and
wherein said output means, after search processing of said link destination searching means is completed, outputs image data corresponding to a data name stored in said data name storing means.

4. The image information processing apparatus according to claim 2, wherein the data is data composing a digital data broadcasting screen.

5. The image information processing apparatus according to claim 2, wherein the data is data composing a Web page.

6. An image information processing apparatus, comprising:
data name extracting means (302) for extracting a name of data composing a data broadcast screen composing a data broadcast program, based on data name information set in a digital data broadcasting data transmission method;
data name storing means (118) for storing the data name extracted by said data name extracting means (302); and
output means (128,130) for outputting image data corresponding to a data name stored in said data name storing means (118).

7. The image information processing apparatus according to claim 2, further comprising:
top page searching means for searching for a top page of a link from among the data to be displayed in the screen, and
wherein said link destination searching means performs the link destination search from the top page retrieved by said top page searching means.

8. The image information processing apparatus according to claim 2, further comprising:
print screen information storing means for storing information on a screen to be printed;
determination means for determining whether or not information on the screen of the link destination retrieved by said link destination searching means is stored in said print screen information storing means; and
control means for, when the information on the screen of the link destination retrieved by said link destination searching means is stored in said print screen information storing means, disabling printing corresponding to the screen, and, when the information on the screen of the link destination retrieved by said link destination searching means is not stored in said print screen information storing means, enabling printing corresponding to the screen.

9. The image information processing apparatus according to claim 3, further comprising:
determination means for determining whether or not a name of data to be displayed in the screen of the link destination retrieved by said link destination searching means is stored in said data name storing means; and
control means for, when the name of data to be displayed in the screen of the link destination retrieved by said link destination searching means is not stored in said data name storing means, storing the data name in said data name storing means.

10. The image information processing apparatus according to claim 2 or claim 6, further comprising:
image data storing means for storing image data to be output by said output means; and
image data processing means for processing image data stored in said image data storing means, based on a given printing condition, and
wherein said output means outputs image data processed by said image data processing means.

11. An image information processing apparatus, comprising:
data name extracting means (302) for extracting a name of data composing a data broadcast screen composing a data broadcast program, based on data name information set in a digital data broadcasting data transmission method;
data name storing means (118) for storing the data name extracted by said data name extracting means (302);
image data extracting means for extracting image data corresponding to a data name stored in said data name storing means; and
print data sending means for outputting a command describing processing to be performed on image data based on a given printing condition, and the image data extracted by said image data extracting means.

12. The image information processing apparatus according to claim 2, further comprising:
first extraction means for extracting a screen whose level is the same as or lower than the level of a currently displayed screen from among the screen of the link destination retrieved by said link destination searching means, based on level information corresponding to the data to be displayed in a screen, and
wherein said output means outputs image data corresponding to the screen extracted by said first extraction means.

13. The image information processing apparatus according to claim 12, wherein said first extraction means extracts a screen that is a link destination of a currently displayed screen and whose level is lower than the level of the currently displayed screen from among the screen of the link destination retrieved by said link destination searching means, based on a search result of said link destination searching means and the level information corresponding to the data to be displayed in a screen.

14. The image information processing apparatus according to claim 6, further comprising:
first extraction means for extracting a screen whose level is the same as or lower than the level of a currently displayed screen from among a screen in which data with the data name stored in said data name storing means is displayed, based on level information corresponding to the data to be displayed in a screen, and
wherein said output means outputs image data corresponding to the screen extracted by said first extraction means.

15. The image information processing apparatus according to claim 14, further comprising:
link destination searching means for sequentially searching for a link destination of a screen, based on link information set in data to be displayed in a screen, and
wherein said first extraction means extracts a page screen that is a link destination of a currently displayed screen and whose level is lower than the level of the currently displayed screen from among a screen in which data with the data name stored in said data name storing means is displayed, based on a search result of said link destination searching means and the level information corresponding to the data to be displayed in a screen.

16. The image information processing apparatus according to claim 12 or claim 14, wherein the level information is data group unit information set in a digital data broadcasting data transmission method.

17. The image information processing apparatus according to claim 12, wherein the level information is directory information set in data composing a Web page.

18. The image information processing apparatus according to claim 12 or claim 14, wherein the level information is link-from-top-page level information set in the data to be displayed in a screen.

19. The image information processing apparatus according to claim 2, further comprising:
second extraction means for extracting a screen whose category is the same as the category of a currently displayed screen from among the screen of the link destination retrieved by said link destination searching means, based on category attribute information set in the data to be displayed in a screen, and
wherein said output means outputs image data corresponding to the screen extracted by said second extraction means.

20. The image information processing apparatus according to claim 19, wherein said second extraction means extracts a screen that is a link destination of a currently displayed screen and whose category is the same as the category of the currently displayed screen from among the screen of the link destination retrieved by said link destination searching means, based on a search result of said link destination searching means and the category attribute information set in the data to be displayed in a screen.

21. The image information processing apparatus according to claim 6, further comprising:
second extraction means for extracting a screen whose category is the same as the category of a currently displayed screen from among a screen in which data with the data name stored in said data name storing means is displayed, based on category attribute information set in the data to be displayed in a screen, and
wherein said output means outputs image data corresponding to the screen extracted by said second extraction means.

22. The image information processing apparatus according to claim 21, further comprising:
link destination searching means for sequentially searching for a link destination of a screen, based on link information set in data to be displayed in a screen, and
wherein said second extraction means extracts a screen that is a link destination of a currently displayed screen and whose category is the same as the category of the currently displayed screen from among a screen in which data with the data name stored in said data name storing means is displayed, based on a search result of said link destination searching means and the category attribute information set in the data to be displayed in a screen.

23. The image information processing apparatus according to claim 2, further comprising:
third extraction means for extracting a screen whose importance is the same as or higher than the importance of a currently displayed screen from among the screen of the link destination retrieved by said link destination searching means, based on importance attribute information set in the data to be displayed in a screen, and
wherein said output means outputs image data corresponding to the screen extracted by said third extraction means.

24. The image information processing apparatus according to claim 23, wherein said third extraction means extracts a screen that is a link destination of a currently displayed screen and whose importance is the same as or higher than the importance of the currently displayed screen from among the screen of the link destination retrieved by said link destination searching means, based on a search result of said link destination searching means and the importance attribute information set in the data to be displayed in a screen.

25. The image information processing apparatus according to claim 6, further comprising:
third extraction means for extracting a screen whose importance is the same as or higher than the importance of a currently displayed screen from among a screen in which data with the data name stored in said data name storing means is displayed, based on importance attribute information set in the data to be displayed in a screen, and
wherein said output means outputs image data corresponding to the screen extracted by said third extraction means.

26. The image information processing apparatus according to claim 25, further comprising:
link destination searching means for sequentially searching for a link destination of a screen, based on link information set in data to be displayed in a screen, and
wherein said third extraction means extracts a screen that is a link destination of a currently displayed screen and whose importance is the same as or higher than the importance of the currently displayed screen from among a screen in which data with the data name stored in said data name storing means is displayed, based on a search result of said link destination searching means and the importance attribute information set in the data to be displayed in a screen.

27. The image information processing apparatus according to claim 2 or claim 6, further comprising:
merging means for, when image data to be outputted by said output means is printed spanning a plurality of pages on paper, merging all or some of the image data in a predetermined page, and
wherein said output means outputs image data of which all or some is merged in the predetermined page by said merging means.

28. The image information processing apparatus according to claim 3 or claim 6, further comprising:
printing order determining means for determining an order of printing so that a screen in which data with the data name stored in said data name storing means is displayed is printed on a category-by-category basis, based on category attribute information set in the data to be displayed in a screen, and
wherein said output means outputs image data corresponding to the data name stored in said data name storing means so that printing is performed in the order determined by said printing order determining means.

29. The image information processing apparatus according to claim 28, wherein a priority order between different categories is a high-to-low order with regard to a highest-level screen in each category.

30. The image information processing apparatus according to claim 3 or claim 6, further comprising:
printing order determining means for determining an order of printing of a screen in which data with the data name stored in said data name storing means is displayed; and
page number adding means for adding to image data corresponding to the screen in which data with the data name stored in said data name storing means is displayed a page number corresponding to the screen and a page number corresponding to a link destination included in the screen, based on the order of printing determined by said printing order determining means and link information set in data to be displayed in a screen, and
wherein said output means outputs image data to which the page numbers have been added by said page number adding means.

31. The image information processing apparatus according to claim 2 or claim 6, further comprising:
print screen extracting means for extracting a screen actually to be printed; and
processing means for performing predetermined print page quantity adjustment processing so that the number of sheets of paper required when printing the screen extracted by said print screen extracting means is within the specified number of sheets.

32. The image information processing apparatus according to claim 31, further comprising:
presentation means for presenting the projected number of print pages obtained as a result of the print page quantity adjustment processing by said processing means; and
setting means for setting, by means of operation input, as a printing mode, whether printing is to be performed in accordance with a result of the print'page quantity adjustment processing by said processing means, or the result of the print page quantity adjustment processing by said processing means is to be canceled and printing of only the specified number of pages is to be performed in a determined order, and
wherein said output means outputs corresponding image data in accordance with the set printing mode.

33. The image information processing apparatus according to claim 2 or claim 6, further comprising:
display means for displaying a screen subject to printing in a list format; and
selection means for selecting, by means of operation input, a screen actually to be printed from among the list displayed by said display means, and
wherein said output means outputs image data corresponding to the screen selected by said selection means.

34. An image information processing method, comprising:
an extraction step of extracting a screen related to a displayed screen from among a screen to be displayed; and
an output step of outputting image data corresponding to the screen extracted in said extraction step.

35. An image information processing method, comprising:
a link destination searching step of searching for a link destination of a screen, based on link information set in data to be displayed in a screen; and
an output step of outputting image data corresponding to a screen of the link destination retrieved in said link destination searching step.

36. The image information processing apparatus according to claim 35, further comprising:
a data name storing step of storing in data name storing means a name of data to be displayed in the screen of the link destination retrieved in said link destination searching step, and
wherein said output step, after search processing of said link destination searching step is completed, outputs image data corresponding to a data name stored in said data name storing means.

37. An image information processing method, comprising:
a data name extracting step of extracting a name of data composing a data broadcast screen composing a data broadcast program, based on data name information set in a digital data broadcasting data transmission method;
a data name storing step of storing the data name extracted in said data name extracting step; and
an output step of outputting image data corresponding to a data name stored in said data name storing means.

38. The image information processing method according to claim 35, further comprising:
a top page searching step of searching for a top page of a link from among the data to be displayed in the screen, and
wherein said link destination searching step performs the link destination search from the top page retrieved in said top page searching step.

39. The image information processing method according to claim 35, further comprising:
a print screen information storing step of storing in print screen information storing means information on a screen to be printed;
a determination step of determining whether or not information on the screen of the link destination retrieved in said link destination searching step is stored in said print screen information storing means; and
a control step of, when the information on the screen of the link destination retrieved in said link destination searching step is stored in said print screen information storing means, disabling printing corresponding to the screen, and, when the information on the screen of the link destination retrieved in said link destination searching step is not stored in said print screen information storing means, enabling printing corresponding to the screen.

40. The image information processing method according to claim 36, further comprising:
a determination step of determining whether or not a name of data to be displayed in the screen of the link destination retrieved in said link destination searching step is stored in said data name storing means; and
a control step of, when the name of data to be displayed in the screen of the link destination retrieved in said link destination searching step is not stored in said data name storing means, storing the data name in said data name storing means.

41. The image information processing method according to claim 35 or claim 37, further comprising:
an image data storing step of storing in image data storing means image data to be output in said output step; and
an image data processing step of processing image data stored in said image data storing means, based on a given printing condition, and
wherein said output step outputs image data processed in said image data processing step.

42. An image information processing method, comprising:
a data name extracting step of extracting a name of data composing a data broadcast screen composing a data broadcast program, based on data name information set in a digital data broadcasting data transmission method;
a data name storing step of storing in data name storing means the data name extracted in said data name extracting step;
an image data extracting step of extracting image data corresponding to a data name stored in said data name storing means; and
a print data sending step of outputting a command describing processing to be performed on image data based on a given printing condition, and the image data extracted in said image data extracting step.

43. The image information processing method according to claim 35, further comprising:
a first extraction step of extracting a screen whose level is the same as or lower than the level of a currently displayed screen from among the screen of the link destination retrieved in said link destination searching step, based on level information corresponding to the data to be displayed in a screen, and
wherein said output step outputs image data corresponding to the screen extracted in said first extraction step.

44. The image information processing method according to claim 37, further comprising:
a first extraction step of extracting a screen whose level is the same as or lower than the level of a currently displayed screen from among a screen in which data with the data name stored in said data name storing means is displayed, based on level information corresponding to the data to be displayed in a screen, and
wherein said output step outputs image data corresponding to the screen extracted in said first extraction step.

45. The image information processing method according to claim 35, further comprising:
a second extraction step of extracting a screen whose category is the same as the category of a currently displayed screen from among the screen of the link destination retrieved in said link destination searching step, based on category attribute information set in the data to be displayed in a screen, and
wherein said output step outputs image data corresponding to the screen extracted in said second extraction step.

46. The image information processing method according to claim 37, further comprising:
a second extraction step of extracting a screen whose category is the same as the category of a currently displayed screen from among a screen in which data with the data name stored in said data name storing means is displayed, based on category attribute information set in the data to be displayed in a screen, and
wherein said output step outputs image data corresponding to the screen extracted in said second extraction step.

47. The image information processing method according to claim 35, further comprising:
a third extraction step of extracting a screen whose importance is the same as or higher than the importance of a currently displayed screen from among the screen of the link destination retrieved in said link destination searching step, based on importance attribute information set in the data to be displayed in a screen, and
wherein said output step outputs image data corresponding to the screen extracted in said third extracting step.

48. The image information processing method according to claim 37, further comprising:
a third extraction step of extracting a screen whose importance is the same as or higher than the importance of a currently displayed screen from among a screen in which data with the data name stored in said data name storing step is displayed, based on importance attribute information set in the data to be displayed in a screen, and
wherein said output step outputs image data corresponding to the screen extracted in said third extraction step.

49. The image information processing method according to claim 35 or claim 37, further comprising:
a merging step of, when image data to be outputted in said output step is printed spanning a plurality of pages on paper, merging all or some of the image data in a predetermined page, and
wherein said output step outputs image data of which all or some is merged in the predetermined page in said merging step.

50. The image information processing method according to claim 36 or claim 37, further comprising:
a printing order determining step of determining an order of printing so that a screen in which data with the data name stored in said data name storing means is displayed is printed on a category-by-category basis, based on category attribute information set in the data to be displayed in a screen, and
wherein said output step outputs image data corresponding to the data name stored in said data name storing means so that printing is performed in the order determined in said printing order determining step.

51. The image information processing method according to claim 36 or claim 37, further comprising:
a printing order determining step of determining an order of printing of a screen in which data with the data name stored in said data name storing means is displayed; and
a page number adding step of adding to image data corresponding to the screen in which data with the data name stored in said data name storing means is displayed a page number corresponding to the screen and a page number corresponding to a link destination included in the screen, based on the order of printing determined in said printing order determining step and link information set in data to be displayed in a screen, and
wherein said output step outputs image data to which the page numbers have been added in said page number adding step.

52. The image information processing method according to claim 35 or claim 37, further comprising:
a print screen extracting step of extracting a screen actually to be printed; and
a processing step of performing predetermined print page quantity adjustment processing so that the number of sheets of paper required when printing the screen extracted in said print screen extracting step is within the specified number of sheets.

53. The image information processing method according to claim 35 or claim 37, further comprising:
a display step of displaying a screen subject to printing in a list format; and
a selection step of selecting, by means of operation input, a screen actually to be printed from among the list displayed in said display step, and
wherein said output step outputs image data corresponding to the screen selected in said selection step.

54. A computer readable medium containing instructions for controlling a computing device to execute an image information processing method according to any one of claims 34, 35, 37, and 42.
